(19) Europäisches Patentamt
European Patent Office
Office européen des brevets

(11) Veröffentlichungsnummer: **0 362 142 B1**

(12) **EUROPÄISCHE PATENTSCHRIFT**

(45) Veröffentlichungstag der Patentschrift: **27.04.94**

(51) Int. Cl.$^5$: **H01B 1/12**, C08K 5/48

(21) Anmeldenummer: **89810719.8**

(22) Anmeldetag: **21.09.89**

# (54) Antistatische und elektrisch leitende Zusammensetzung.

(30) Priorität: **30.09.88 CH 3639/88**

(43) Veröffentlichungstag der Anmeldung:
**04.04.90 Patentblatt 90/14**

(45) Bekanntmachung des Hinweises auf die Patenterteilung:
**27.04.94 Patentblatt 94/17**

(84) Benannte Vertragsstaaten:
**BE CH DE FR GB IT LI NL**

(56) Entgegenhaltungen:
**EP-A- 0 109 360**
**EP-A- 0 153 905**
**EP-A- 0 285 564**
**US-A- 3 403 165**

(73) Patentinhaber: **CIBA-GEIGY AG**
**Klybeckstrasse 141**
**CH-4002 Basel(CH)**

(72) Erfinder: **Finter, Jürgen, Dr.**
**Zasiusstrasse 100**
**D-7800 Freiburg(DE)**
Erfinder: **Hilti, Bruno, Dr.**
**Marschalkenstrasse 27**
**CH-4054 Basel(CH)**
Erfinder: **Mayer, Carl W, Dr.**
**Steingrubenweg 224**
**CH-4125 Riehen(CH)**
Erfinder: **Minder, Ernst**
**Bernhardsmattweg 1**
**CH-4450 Sissach(CH)**

**EP 0 362 142 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Zusammensetzung aus a) einem thermoplastischen Polymer mit aktiven Cl-, Br- und/oder I-Atomen, und b) einem gegebenenfalls substituierten Tetrathio-, Tetraseleno- oder Tetratelluronaphthalin oder -tetracen oder Mischungen davon, eine Zusammensetzung, die das besagte Polymer und einen Charge-Transfer-Komplex (CT-Komplex) aus diesen Naphthalinen und Tetracenen und Cl, Br und/oder I enthält, ein Verfahren zur Herstellung dieser Zusammensetzung und deren Verwendung zur Herstellung antistatisch ausgerüsteter bzw. elektrisch leitender Formteile, Fäden, Fasern, Folien, Beschichtungen und Verbundstoffen.

In der DE-A-3005849 sind elektrisch leitende Formmassen aus einem thermoplastischen Kunststoff und einem CT-Komplex beschrieben, wobei diese CT-Komplexe faser- oder nadelförmig sind. Als Elektronendonator werden N, O und/oder S enthaltende Verbindungen und als Elektronenacceptor Polycyanverbindungen verwendet. Die Formmassen können durch Zugabe des Akzeptors zu einer Polymerlösung, in der der Donator gelöst ist, und anschliessendes Verdampfen des Lösungsmittels hergestellt werden. M. Kryszewski et al. beschreiben in Pure and Applied Chemistry, Vol. 56, No. 3, Seiten 355-368 (1984) elektrisch leitende Polymerzusammensetzungen, die als CT-Komplexe solche aus Tetrathiotetracen als Elektronendonator und Tetracyanochinodimethan, Tetracyanoethylen oder Chloranil als Elektronenacceptor enthalten. Die elektrische Leitfähigkeit dieser Systeme ist auf Grund der relativ niedrigen Leitfähigkeit der reinen CT-Komplexe gering.

Die Stabilität der CT-Komplexe mit Tetracyanochinodimethan ist gering. Es ist bekannt, dass diese CT-Komplexe gegen eine HCN-Abspaltung stabilisiert werden müssen, vgl. DE-A-3335513.

J.C. Stark et al. beschreiben in Organometallics, 3, S. 732-735 (1984), peri-dichalkogenierte Polyacene, von denen bestimmte Salze eine hohe elektrische Leitfähigkeit besitzen. In US-PS 4 384 025, US-PS 4 522 754, DE-OS 3 510 072, DE-OS 3 635 124 und EP-A-0 153 905 sind solche Halogenide beschrieben. Diese Halogenide weisen im allgemeinen einen Schmelzpunkt über 300 °C auf. Ferner sind sie in organischen Lösungsmitteln praktisch unlöslich. Wegen dieser Eigenschaften können die Halogenide nur in Form von Pulvern in Polymere eingearbeitet werden. Solche Polymerzusammensetzungen weisen eine sehr geringe elektrische Leitfähigkeit auf, da die leitenden Teilchen in der Polymermatrix isoliert sind.

Ein Gegenstand vorliegender Erfindung ist eine Zusammensetzung, enthaltend

a) ein in einem inerten organischen Lösungsmittel lösliches thermoplastisches Polymer, das an ein Polymerrückgrat über eine Gruppe -O-, -O-CO-, $-CO-OR^{22}-OCO-$ oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_2$, Benzylen oder Xylylen darstellt, und

b) einen Charge-Transfer-Komplex (CT-Komplex), der aus Chlor, Brom oder Iod und einer Verbindung der Formel I oder Ia oder Mischungen davon gebildet ist,

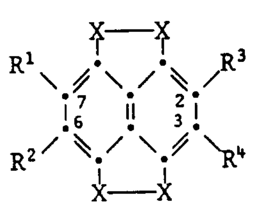 (I),

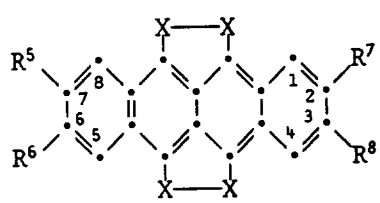 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

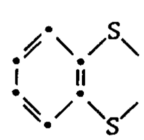 oder 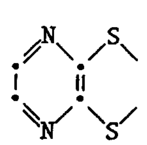 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder

$R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für -$COR^9$ und $R^8$ für H oder -$COR^9$, oder $R^5$ und $R^6$ für H und $R^7$ und $R^8$ zusammen für -CO-O-CO- oder -CO-$NR^{10}$-CO- stehen, worin $R^9$ Halogen, -OH, -$NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist.

Die Komponente b) ist bevorzugt in einer Menge von 0,01 bis 20 Gew.-%, besonders 0,05 bis 10 Gew.-% und insbesondere 0,1 bis 5 Gew.-% enthalten, bezogen auf das Polymer a).

Einige Verbindungen der Komponente b) und ihre Herstellung sind in den zuvor erwähnten Publikationen beschrieben. Bevorzugte CT-Komplexe der Komponente b) sind solche, die aus Verbindungen der Formel Ia gebildet und die besonders aus Tetrathiotetracen, Tetraselenotetracen, 2-Fluor- oder 2,3-Difluortetraselenotetracen gebildet sind.

Besonders bevorzugt ist der CT-Komplex aus Cl und einer Verbindung der Formel Ia gebildet. Insbesondere handelt es sich bei dem CT-Komplex der Komponente b) um $(Tetraselenotetracen)_2Cl$.

In einer bevorzugten Ausführungsform ist der CT-Komplex der Komponente b) in Form eines Nadelnetzwerkes aus Kristallnadeln ausgebildet.

Neue Verbindungen der Formeln II oder IIa

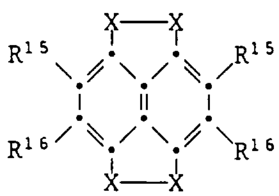 (II), 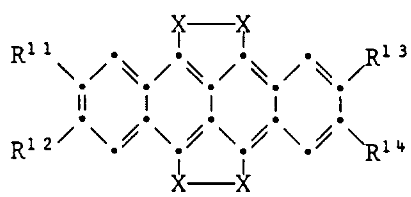 (IIa),

worin $R^{15}$ und $R^{16}$ je Phenylthio, 4-Methyl- oder 4-Methoxyphenylthio oder 4-Pyridylthio oder worin $R^{15}$ und $R^{16}$ zusammen

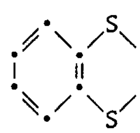 oder 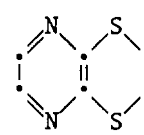

bedeuten, $R^{11}$ für -$CH_3$ und $R^{12}$, $R^{13}$ und $R^{14}$ für H, $R^{11}$ und $R^{12}$ für Cl oder $CH_3$ und $R^{13}$ und $R^{14}$ für H stehen oder $R^{11}$, $R^{12}$, $R^{13}$ und $R^{14}$ für -$CH_3$ oder F stehen, und X S, Se oder Te darstellt, können z.B. wie nachfolgend beschrieben hergestellt werden:

a) Tetramethylierte Tetracene

Man setzt die bekannten Ausgangsverbindungen 4,5-Dimethylphthalsäureanhydrid und 2,3-Dimethyl-6,7-dihydroxynaphthalin in Gegenwart von $B_2O_3$ zu 2,3,8,9-Tetramethyl-5,12-dihydroxy-6,11-dioxo-tetracen (A) um. Diese Reaktion und die weitere Chlorierung und Reduktion zum in 5,6,11,12-Stellung tetrachlorierten Produkt sind in der DE-OS 3635124 beschrieben. Die Umsetzung mit $Na_2X_2$ führt zum entsprechenden tetrachalkogenierten Tetracen. In einer Variante kann das 2,3,8,9-Tetramethyl-5,5,6,11,12,12-hexachlordihydrotetracen (das bei der Chlorierung mit $PCl_5/POCl_3$ erhalten wird) mit 1 Val $Na_2Se_2$ und 2 Val $Na_2Se$ direkt zum entsprechenden Tetraselenotetracen umgesetzt werden. Die Verbindung A kann auch mit Dimethylsulfat zum 5,12-Dimethoxyderivat alkyliert werden [vgl. Chem. Pharm. Bull. 20(4), 827 (1972)]. Die Umsetzung dieses Derivates mit $P_4S_{10}$ in Tetrahydrofuran, die nachfolgende Oxidation mit $Br_2$ und anschliessende Reduktion mit $TiCl_3$ führt zum 2,3,8,9-Tetramethyl-5,6,11,12-tetrathiotetracen.

b) 2-Methyltetracene

Entsprechend der Vorschrift in Chem. Ber. 64, 1713 (1931) wird 2-Methyl-5,12-dioxo-dihydrotetracen erhalten. Die Reduktion mit Zn in alkalischer Lösung führt zum 2-Methyl-5,12-tetrahydrotetracen, das mit Chloranil zum 2-Methyltetracen dehydriert werden kann. Die Umsetzung mit S (siehe US-PS 3 723 417) ergibt das 2-Methyl-5,6,11,12-tetrathiotetracen. Man kann auch wie in a) beschrieben das 2-Methyl-5,6,11,12-tetrachlortetracen herstellen und mit $Na_2X_2$ umsetzen.

c) Tetrafluortetracene

Gemäss der Vorschrift in Chem. Ber 31, 1159 und 1272 (1898) wird durch Kondensation von 2,3-Difluorphthalsäureanhydrid mit Bernsteinsäure und anschliessende Behandlung des Kondensationsproduktes mit Natriumethylat in Ethanol 2,3,8,9-Tetrafluor-5,12-dihydroxy-6,11-dioxo-tetracen (B) erhalten. Die weitere Umsetzung mit $PCl_5$ und anschliessend mit $SnCl_2/CH_3COOH$ zum 2,3,8,9-Tetrafluor-5,6,11,12-tetrachlortetracen erfolgt analog der Vorschrift in Zhuv. Org. Kim. 15(2), 391 (1979). Die Umsetzung mit $Na_2X_2$ ergibt die entsprechenden 2,3,8,9-Tetrafluortetrachalkogentetracene. Die Reduktion von Verbindung B mit Al in Cyclohexanol führt zum 2,3,8,9-Tetrafluortetracen, das mit Schwefel [siehe Bull. Soc. Chim. 15, 27 (1948)] zum 2,3,8,9-Tetrafluor-5,6,11,12-tetrathiotetracen reagiert.

d) Naphthaline

Ausgehend von bekannten (siehe US-PS 3 769 276) 2,3,6,7-Tetrachlortetrachalkogennaphthalinen können durch die Umsetzung mit den Kaliumsalzen von Thiophenol, 4-Methylthiophenol, 4-Methoxythiophenol, 4-Mercaptopyridin, 1,2-Benzodithiol bzw. Pyrazin-2,3-dithiol die entsprechenden 2,3,6,7-substituierten Tetrachalkogennaphthaline erhalten werden.

e) Dimethyl- und Dichlortetracene

Man verfährt analog wie unter a) beschrieben, setzt aber als Ausgangsverbindungen 4,5-Dimethyl- bzw. 4,5-Dichlorphthalsäureanhydrid mit 6,7-Dihydroxynaphthalin um und chloriert mit $PCl_5/POCl_3$.

In den Formeln I, Ia, II und IIa stellt X bevorzugt S oder Se dar. $R^9$ ist als Halogen besonders Chlor.

In dem Rest -OM kann M ein Metall- oder Ammoniumkation sein. Als Metallkation kommen insbesondere solche der Alkali- und Erdalkalimetalle in Frage, z.B. $Li^{\oplus}$, $Na^{\oplus}$, $K^{\oplus}$, $Mg^{2\oplus}$, $Ca^{2\oplus}$, $Sr^{2\oplus}$ und $Ba^{2\oplus}$. Ferner sind $Zn^{2\oplus}$ und $Cd^{2\oplus}$ geeignet. Als Ammoniumkationen kommen z.B. $NH_4^{\oplus}$ und primäres, sekundäres, tertiäres oder quaternäres Ammonium in Frage, die vorzugsweise $C_1$-$C_{12}$-Alkyl-, Cyclohexyl-, Cyclopentyl-, Phenyl- oder Benzylgruppen enthalten kann. Die Ammoniumkationen können sich auch von 5- oder 6-gliedrigen heterocyclischen Aminen ableiten, z.B. Piperidin, Pyrrol und Morpholin.

Bei $R^9$ als Rest eines Alkoholes handelt es sich bevorzugt um $C_1$-$C_6$-Alkoxy oder $C_2$-$C_6$-Hydroxyalkoxy, Benzyloxy, Phenoxy, Cyclopentyloxy oder Cyclohexyloxy.

$R^9$ als Rest eines primären oder sekundären Amins leitet sich bevorzugt von Alkylaminen mit einer bzw. 2 $C_1$-$C_6$-Alkylgruppen ab.

$R^{10}$ stellt bevorzugt H, $C_1$-$C_{18}$-Alkyl, Phenyl oder Benzyl dar.

$R^{10}$ enthält als Alkyl bevorzugt 1 bis 12 und besonders 1 bis 6 C-Atome.

Beispiele für Alkyl, das linear oder verzweigt sein kann, sind: Methyl, Ethyl, n- oder i-Propyl, n-, i- oder t-Butyl, Pentyl, Hexyl, 2-Ethylhexyl, Heptyl, Octyl, Nonyl, Decyl, Undecyl und Dodecyl.

Beispiele für Alkoxy und Hydroxyalkoxy sind: Methoxy, Ethoxy, Propoxy, Butoxy, Pentoxy, Hexoxy, $\beta$-Hydroxyethoxy, $\gamma$-Hydroxypropoxy, $\delta$-Hydroxybutoxy und $\omega$-Hydroxyhexoxy.

In einer bevorzugten Ausführungsform enthält die Zusammensetzung bis zu 95 Gew.-%, bezogen auf das Polymer a), mindestens eines von Komponente a) verschiedenen thermoplastischen oder elastomeren Polymeren. Insbesondere sind bis zu 80 Gew.-% des zusätzlichen Polymeren enthalten.

Die zusätzlichen Polymeren sind vorteilhaft gegenüber den Verbindungen der Komponente b) inert. Die Polymeren enthalten daher bevorzugt im wesentlichen keine stark sauren Gruppen, z.B. Carboxygruppen, bzw. stark basische Gruppen, z.B. primäre oder sekundäre Amingruppen. Bei den Polymeren kann es sich z.B. um Thermoplaste oder Elastomere handeln.

Eine bevorzugte Ausführungsform ist dadurch gekennzeichnet, dass es sich bei dem thermoplastischen Polymer um Polymere von Mono- und Diolefinen; Copolymere von Mono- und/oder Diolefinen; Polystyrol, Poly-(p-methylstyrol), Poly-($\alpha$-methylstyrol); Copolymere von Styrol oder $\alpha$-Methylstyrol; Pfropfcopolymere von Styrol oder $\alpha$-Methylstyrol; halogenhaltige Polymere; Polymere und Copolymere von Derivaten $\alpha,\beta$-ungesättigter Säuren; Polymere, die sich von Acylderivaten oder Acetaten ungesättigter Alkohole ableiten; Homo- und Copolymere von cyclischen Ethern; Polyacetale; Polyphenylenoxide und -sulfide und deren Mischungen mit Styrolpolymeren; Polyurethane; Polyharnstoffe; Polyimide; Polybenzimidazole; Polycarbonate; Polyester; Polyestercarbonate; Polysulfone; Polyethersulfone; Polyetherketone; Polyvinylcarbazol; Polyaddukte von gegebenenfalls hydroxyalkylierten Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren; Derivate von Cellulose; mit Schwefel vernetzte Produkte aus Doppelbindungen enthaltenden Polymeren; und Mischungen der vorgenannten Polymeren handelt.

Beispiele für Polymere sind:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen, z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere, sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäureester-Copolymere, LLDPE/Ethylen-Vinylacetat-Copolymere und LLDPE/Ethylen-Acrylsäureester-Copolymere.

4. Polystyrol, Poly-(p-methylstyrol), Poly-($\alpha$-methylstyrol).

5. Copolymere von Styrol oder $\alpha$-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol, Styrol-Ethylen/Propylen-Styrol oder Styrol-4-Vinylpyridin-Styrol.

6. Pfropfcopolymere von Styrol oder $\alpha$-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von Derivaten $\alpha,\beta$-ungesättigter Säuren ableiten, wie Polyacrylate, Polymethacrylate und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere, Acrylnitril-Alkylmethacrylat-Butadien-Terpolymere oder Alkylmethacrylat-4-Vinylpyridin-Copolymere.

10. Polymere, die sich von Acylderivaten oder Acetalen ungesättigter Alkohole ableiten, wie Polyvinylacetat, -stearat, -benzoat, -maleat, Polyvinylbutyral, Polyallylphthalat; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder Polybutylenglykol.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

13. Polyphenylenoxide und -sulfide und deren Mischungen mit Styrolpolymeren.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
15. Polyharnstoffe, Polyimide und Polybenzimidazole. Unter den Polyimiden sind besonders lösliche Polyimide bevorzugt wie sie z.B. in DE-AS 1962588, EP-A-132221, EP-A-134752, EP-A-162017, EP-A-181837 und EP-A-182745 beschrieben sind.
16. Polycarbonate, Polyester, z.B. Polyalkylenterephthalate, und Polyestercarbonate.
17. Polysulfone, Polyethersulfone und Polyetherketone.
18. Polyvinylcarbazol.
19. Polyaddukte von gegebenenfalls hydroxyalkylierten Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren.
20. Polymerhomolog chemisch abgewandelte Derivate von Cellulose, wie Celluloseacetate, -propionate und -butyrate, bzw. die Celluloseether, wie Methylcellulose.
21. Mit Schwefel vernetzte (vulkanisierte) Produkte aus Doppelbindungen enthaltenden Polymeren wie z.B. Naturkautschuk, Synthesekautschuk, Butadien- bzw. Isoprenpolymerisate oder -copolymerisate.
22. Mischungen (Polyblends) der vorgenannten Polymeren, wie z.B. PP/EPDM, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS.

Eine bevorzugte Gruppe von thermoplastischen Polymeren sind Polyolefine, Polystyrol, Polyvinylchlorid, Polyvinylidenchlorid, Polyvinylidenfluorid, Polyacrylate, Polymethacrylate, Polycarbonate, aromatische Polysulfone, aromatische Polyether, aromatische Polyethersulfone und Polyimide sowie Polyvinylcarbazol.

Die thermoplastischen Polymeren der Komponente a) können einen Polymerisationsgrad von 5 bis 10 000, bevorzugt 10 bis 5000 und insbesondere 10 bis 1000 aufweisen.

Die aliphatischen und cycloaliphatischen Seitengruppen der Komponente a) sind besonders in $\alpha$-, $\beta$- oder $\gamma$-Stellung, besonders in $\alpha$- und/oder $\beta$-Stellung mit Cl, Br oder I substituiert. Die aliphatische Gruppe enthält bevorzugt 1 bis 4 C-Atome, die teilweise oder vollständig mit Cl, Br oder I substituiert ist. Die Substitution mit Cl ist besonders bevorzugt.

Bei der aliphatischen Seitengruppe kann es sich z.B. um lineares oder verzweigtes $C_1$-$C_{12}$-, besonders $C_1$-$C_6$- und insbesondere $C_1$-$C_4$-Alkyl handeln. Beispiele sind Methyl, Ethyl und die Isomeren von Propyl, Butyl, Pentyl, Hexyl, Heptyl, Octyl, Nonyl, Decyl, Undecyl und Dodecyl. Beispiele für cycloaliphatische Gruppen sind besonders Cyclopentyl und Cyclohexyl. Besonders bevorzugt sind mit Cl, Br oder I, besonders mit Cl ein- oder mehrfach substituiertes Methyl oder Ethyl, z.B. $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$.

An die Gruppen -O-, -O-CO-, $-CO-OR^{22}-O-CO-$ oder -CO-O- sind bevorzugt Gruppen der Formel $-C_mH_nX^2_o$ gebunden, worin m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt. $X^2$ steht bevorzugt für Cl, m bevorzugt für 1 bis 6, besonders 1 bis 4, n bevorzugt für 0 oder 1 bis 12, besonders 1 bis 8, o bevorzugt für 1 bis 13, besonders 1 bis 9, und die Summe von n + o = 2 m + 1.

Den thermoplastischen Polymeren können unterschiedliche Hydroxylgruppen bzw. Carboxylgruppen enthaltende Polymere oder Mischungen davon zu Grunde liegen, z.B. Polyester, Polyesteramide, Polyurethane, Polyamide, Polycarbonate und Polyimide aus Hydroxylgruppen enthaltenden Monomeren, verseifte und gegebenenfalls hydroxyalkylierte Polymerisate von Vinylestern oder -ethern, hydroxylierte Polydiolefine wie z.B. Polybutadien oder Polyisopren, Polyacrylate oder Polymethacrylate mit Hydroxyalkylresten in der Estergruppe, Polyacryl- oder Polymethacrylsäuren, oder reduzierte Polyketone oder Copolymere davon; sowie Copolymerisate von gegebenenfalls hydroxyalkyliertem Vinylalkohol, Acrylaten oder Methacrylaten bzw. Acrylsäuren oder Methacrylsäuren oder Diolefinen mit Comonomeren wie z.B. Acrylnitril, Olefinen, Diolefinen, Vinylchlorid, Vinylidenchlorid, Vinylfluorid, Vinylidenfluorid, Styrol, $\alpha$-Methylstyrol, Maleinsäureanhydrid, Maleinsäureimid, Vinylethern und Vinylestern; und Polyaddukte von gegebenenfalls hydroxyalkylierten Epoxidverbindungen mit durchschnittlich mehr als einer Epoxidgruppe im Molekül und Diolen, primären Monoaminen, disekundären Diaminen, disekundären linearen oder cyclischen Dicarbonsäurediamiden oder Dicarbonsäuren.

Eine bevorzugte Ausführungsform ist dadurch gekennzeichnet, dass es sich bei dem thermoplastischen Polymer der Komponente a) um ein lineares Polyaddukt aus einer Glycidylverbindung mit durchschnittlich mehr als einer Epoxidgruppe und einem Diol, primären Monoamin, disekundären Diamin, disekundären

linearen oder cyclischen Dicarbonsäurediamid oder einer Dicarbonsäure handelt, in dem das H-Atom der sekundären OH-Gruppen mindestens teilweise durch eine Gruppe $-CO-C_mH_nX^2_o$ substituiert ist, worin m für eine Zahl von 1 bis 12, n für 0 oder eine Zahl von 1 bis 24 und o eine Zahl von 1 bis 25 sind, und die Summe von n + o = 2 m + 1 ist, und $X^2$ für Cl, Br oder I steht.

Den Polyaddukten liegen bevorzugt Glycidylverbindungen mit durchschnittlich zwei Epoxidgruppen im Molekül zu Grunde.

Als Glycidylverbindungen kommen vor allem solche mit zwei an ein Heteroatom (z.B. Schwefel, vorzugsweise Sauerstoff oder Stickstoff) gebundenen Glycidylgruppen, β-Methylglycidylgruppen oder 2,3-Epoxycyclopentylgruppen in Frage; genannt seien insbesondere Bis-(2,3-epoxycyclopentyl)-ether; Diglycidylether von mehrwertigen aliphatischen Alkoholen, wie 1,4-Butandiol, oder Polyalkylenglykolen, wie Polypropylenglykole; Diglycidylether von cycloaliphatischen Polyolen, wie 2,2-Bis-(4-hydroxycyclohexyl)-propan; Diglycidylether von mehrwertigen Phenolen, wie Resorcin, Bis-(p-hydroxyphenyl)-methan, 2,2-Bis-(p-hydroxyphenyl)-propan (= Diomethan), 2,2-Bis-(4'-hydroxy-3',5'-dibromphenyl)-propan, 1,3-Di-(p-hydroxyphenyl)-ethan; Di-(β-methylglycidyl)-ether der oben angeführten zweiwertigen Alkohole oder zweiwertigen Phenole; Diglycidylester von Dicarbonsäuren, wie Phthalsäure, Terephthalsäure, $\Delta^4$-Tetrahydrophthalsäure und Hexahydrophthalsäure; N,N-Diglycidylderivate von primären Aminen und Amiden und heterocyclischen, zwei N-Atome enthaltenden Stickstoffbasen, und N,N'-Diglycidylderivate von disekundären Diamiden und Diaminen, wie N,N-Diglycidylanilin, N,N-Diglycidyltoluidin, N,N-Diglycidyl-p-aminophenyl-methyl-ether, N,N'-Dimethyl-N,N'-diglycidyl-bis-(p-aminophenyl)-methan; N',N''-Diglycidyl-N-phenyl-isocyanurat; N,N'-Diglycidylethylenharnstoff; N,N'-Diglycidyl-5,5-dimethyl-hydantoin, N,N'-Diglycidyl-5-isopropyl-hydantoin, N,N-Methylen-bis-(N',N'-diglycidyl-5,5-dimethylhydantoin), 1,3-Bis-(N-glycidyl-5,5-dimethylhydantoin)-2-hydroxypropan; N,N'-Diglycidyl-5,5-dimethyl-6-isopropyl-5,6-dihydro-uracil.

Die Glycidylverbindungen können mit aliphatischen, cycloaliphatischen oder aromatischen Diolen zu den bevorzugten Polyaddukten umgesetzt werden, wobei durch Addition an der Glycidylgruppe eine sekundäre Alkoholgruppe gebildet wird, die mit Cl-, Br- und/oder I-haltigen Carbonsäuren verestert werden kann.

Die Glycidylverbindungen können aber auch mit primären, aliphatischen, cycloaliphatischen oder aromatischen Monoaminen (z.B. Anilin, Toluidin, $C_1$-$C_{12}$-Alkylaminen, $C_2$-$C_{12}$-Hydroxyalkylaminen), aliphatischen, cycloaliphatischen oder aromatischen Dicarbonsäuren (z.B. Maleinsäure, Adipinsäure, Trimethyladipinsäure, Sebacinsäure, Azelainsäure, Bernsteinsäure, Dodecylbernsteinsäure, Phthalsäure, Terephthalsäure, $\Delta^4$-Tetrahydrophthalsäure, Hexahydrophthalsäure, 4-Methylhexahydrophthalsäure, 3,6-Endomethylen-$\Delta^4$-tetrahydrophthalsäure, 4-Methyl-3,6-endomethylen-$\Delta^4$-tetrahydrophthalsäure) oder aliphatischen, cycloaliphatischen, heterocyclischen oder aromatischen Bissekundäraminen oder Bissekundärcarbonsäureamiden (z.B. N,N'-Dimethylethylendiamin, N,N'-Dimethylpropylen-1,3-diamin, N,N'-Dimethylhexamethylendiamin, N,N'-Dicyclohexylhexamethylendiamin, N,N',N''-Trimethyldiethylentriamin, N,N'-Diethylpropylen-1,3-diamin, N-Methyl-3,5,5-trimethyl-3-(methylaminomethyl)-cyclohexylamin, N,N'-dimethylierte oder -diethylierte aromatische Diamine, z.B. m- oder p-Phenylendiamin, Bis-(4-aminophenyl)-methan oder -sulfon, 2,2-Bis-(4-aminophenyl)-propan, N,N-Dimethyl-m-xylylendiamin, sowie Ethylenharnstoff, 5,5-Dimethylhydantoin, 5-Isopropylhydantoin, N,N-Methylen-bis-5,5-dimethylhydantoin, 1,3-Bis-(5,5-dimethylhydantoin)-2-hydroxypropan, 5,5-Dimethyl-6-isopropyl-5,6-dihydrouracil), durch Polyaddition zu linearen Polyaddukten umgesetzt werden.

Bevorzugt ist eine erfindungsgemässe Zusammensetzung, worin das Polyaddukt

a) 100 bis 0,1 Mol-% gleiche oder verschiedene Struktureinheiten der Formel V

$$-O-R^{24}-O-CH_2-\underset{\displaystyle OR^{26}OCOC_mH_nX^2_o}{\underset{|}{C}H}-CH_2-OR^{25}- \qquad (V)$$

und

b) 99,9 bis 0 Mol-% gleiche oder verschiedene Struktureinheiten der Formel VI

$$-O-R^{24}-O-CH_2-\underset{\displaystyle OR'}{\underset{|}{C}H}-CH_2-OR^{25}- \qquad (VI)$$

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, und R' H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, -$OR^{26}$- eine direkte Bindung oder $R^{26}$ unsubstituiertes oder mit $C_1$-$C_{16}$-Alkyl substituiertes Ethylen darstellt.

Bevorzugt sind 100 bis 20, besonders 30 bis 100 Mol% Struktureinheiten der Formel V, und 80 bis 0, besonders 70 bis 0 Mol% Struktureinheiten der Formel VI enthalten.

In einer bevorzugten Ausführungsform stellen $R^{24}$ und $R^{25}$ gleiche Reste dar. $R^{24}$ und $R^{25}$ in der Bedeutung als Rest mit aliphatischen Diolgruppen enthalten bevorzugt 2 bis 12, besonders 2 bis 8 C-Atome. Die Hydroxylgruppen können an offenkettige oder cyclische aliphatische Reste gebunden sein. Als aliphatischer Rest kommt z.B. lineares oder verzweigtes $C_2$-$C_{12}$-Alkylen, $C_3$-$C_8$-Cycloalkylen, $C_1$-$C_4$-Alkyl-$C_5$-$C_8$-cycloalkyl, Cyclohexylmethylen oder Cyclohexyldimethylen in Frage. Beispiele sind Ethylen, 1,2- oder 1,3-Propylen, 1,2-, 1,3- oder 1,4-Butylen, 1,2-, 1,3-, 1,4- oder 1,5-Pentylen, 1,2-, 1,3-, 1,4-, 1,5- oder 1,6-Hexylen, Heptylen, Octylen, Nonylen, Decylen, Undecylen, Dodecylen, 1,3-Cyclopentylen, 1,3-oder 1,4-Cyclohexylen, 2-Methyl-1,4-cyclohexylen und Cyclohexyl-1,4-dimethylen.

Die aromatischen Diolgruppen der für die Polyaddukte verwendeten Diole sind insbesondere phenolische Gruppen. Die Diolreste mit phenolischen Gruppen enthalten bevorzugt 6-30, besonders 6-20 C-Atome. Eine bevorzugte Ausführungsform sind Zusammensetzungen, worin $R^{24}$ und $R^{25}$ unabhängig voneinander einen Rest der Formel

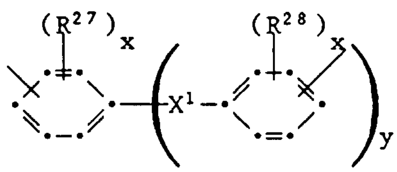

darstellen, worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, -$SO_2$-, -CO-, -$CO_2$-, -N($C_1$-$C_4$-Alkyl)- oder -$Si(CH_3)_2$- bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

$X^1$ stellt bevorzugt eine direkte Bindung, Methylen, Ethylen, $C_2$-$C_6$-Alkyliden, Cyclohexyliden, Cyclopentyliden, -O- oder -S- dar. $R^{27}$ und $R^{28}$ stehen vorzugsweise für H oder Methyl und y steht bevorzugt für 1.

Insbesondere bedeuten $R^{24}$ und $R^{25}$ den Rest

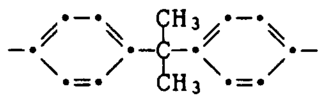 .

$R^{26}$ als mit Alkyl substituiertes Ethylen enthält bevorzugt $C_1$-$C_4$- und besonders $C_1$- oder $C_2$-Alkyl. Besonders bevorzugt sind Ethylen, 1,2-Propylen und 1,2- oder 2,3-Butylen.

R' in der Bedeutung von $C_1$-$C_{20}$-Alkyl kann linear oder verzweigt sein. R' in der Bedeutung von Acyl kann z.B. $C_1$-$C_{20}$-Alkyl-CO-, $C_5$-$C_8$-Cycloalkyl-CO-, $C_1$-$C_{15}$-Alkyl-$C_5$-$C_8$-cycloalkyl-CO-, $C_5$-$C_8$-Cycloalkyl-$CH_2$-CO-, $C_1$-$C_{14}$-Alkyl-$C_5$-$C_8$-cycloalkyl-$CH_2$-CO-, Phenyl-CO-, Benzyl-CO-, $C_1$-$C_{14}$-Alkylphenyl-CO- oder -benzyl-CO- sein. Bei dem Kohlenwasserstoffrest im Aminocarbonyl kann es sich z.B. um $C_1$-$C_{20}$-Alkyl-, $C_5$-$C_8$-Cycloalkyl-, $C_1$-$C_{15}$-Alkyl-$C_5$-$C_8$-cycloalkyl-, $C_5$-$C_8$-Cycloalkyl-$CH_2$-, $C_1$-$C_{14}$-Alkyl-$C_5$-$C_8$-cycloalkyl-$CH_2$-, Phenyl-, Benzyl-, $C_1$-$C_{14}$-Alkylphenyl- oder -benzyl- handeln. R' steht bevorzugt für H.

Eine andere bevorzugte Ausführungsform ist dadurch gekennzeichnet, dass das thermoplastische Polymer der Komponente a) ein Homo- oder Copolymer eines Acrylsäure- oder Methacrylsäureesters ist, das chlorierte, bromierte und/oder iodierte aliphatische oder cycloaliphatische Gruppen in der Estergruppe enthält.

Eine besonders bevorzugte Ausführungsform ist dadurch gekennzeichnet, dass das Polymer

a) 0,1 bis 100 Mol-% mindestens eines Strukturelements der Formel III

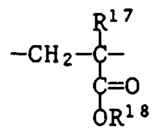 (III),

und

b) 0 bis 99,9 Mol-% mindestens eines Strukturelements der Formel IV

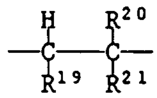 (IV)

enthält, bezogen auf das Polymer, worin $R^{17}$ für H oder Methyl steht; $R^{18}$ einen Rest

$$-(R^{22}-O-CO)_z-C_mH_nX^2_o$$

darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

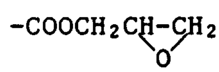

oder Phenyl darstellt, worin $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)-benzyl darstellt.

Bevorzugt sind 100 bis 20, besonders 100 bis 30 Mol% Struktureinheiten der Formel III und 80 bis 0, besonders 70 bis 0 Mol% Struktureinheiten der Formel IV enthalten.

$R^{17}$ steht bevorzugt für Methyl. Für $X^2$, m, n und o gelten die zuvor angegebenen Bevorzugungen und z bedeutet bevorzugt 1.

$R^{22}$ ist bevorzugt unsubstituiert oder mit OH oder Cl substituiert. $R^{22}$ enthält als Alkylen bevorzugt 2 bis 6 C-Atome. Das Alkylen kann linear oder verzweigt sein. Beispiele sind Ethylen und die Isomeren von Propylen, Butylen, Pentylen, Hexylen, Heptylen, Octylen, Nonylen, Decylen, Undecylen und Dodecylen. $R^{22}$ ist als Cycloalkylen besonders Cyclohexylen und in den Cycloalkylen enthaltenden Resten bevorzugt Cyclohexylen.

$R^{23}$ kann lineares oder verzweigtes $C_1$-$C_{18}$-, bevorzugt $C_1$-$C_{12}$- und besonders $C_1$-$C_6$-Alkyl sein. $R^{23}$ stellt als Cycloalkyl besonders Cyclopentyl oder Cyclohexyl dar. Bei $R^{23}$ als ($C_1$-$C_{12}$-Alkyl)-cycloalkyl ist das Cycloalkyl besonders Cyclopentyl oder Cyclohexyl und die Alkylgruppe kann linear oder verzweigt sein und enthält bevorzugt 1 bis 6, besonders 1 bis 4 C-Atome. Bedeutet $R^{23}$ Alkylphenyl oder Alkylbenzyl, so kann die Alkylgruppe linear oder verzweigt sein und enthält bevorzugt 1 bis 6, besonders 1 bis 4 C-Atome.

$R^{19}$ steht bevorzugt für H. Bedeutet $R^{19}$ Alkyl, so handelt es sich bevorzugt um Methyl oder Ethyl. Bedeutet $R^{19}$ -$COOR^{23}$, so stellt $R^{23}$ bevorzugt $C_1$-$C_{12}$-, besonders $C_1$-$C_6$-Alkyl dar.

Bedeutet $R^{20}$ Alkyl, so handelt es sich bevorzugt um $C_1$-$C_4$-Alkyl, z.B. Methyl, Ethyl, n-Propyl und n-Butyl. $R^{20}$ steht bevorzugt für H, Cl oder $C_1$-$C_4$-Alkyl.

Bedeutet $R^{21}$ die Gruppe $R^{23}$-O-, so stellt $R^{23}$ bevorzugt $C_1$-$C_{12}$-, besonders $C_1$-$C_6$-Alkyl dar. Bedeutet $R^{21}$ Alkyl, so enthält es bevorzugt 1 bis 6, besonders 1 bis 4 C-Atome. Bedeutet $R^{21}$ die Gruppe -$COOR^{23}$, so stellt $R^{23}$ bevorzugt $C_1$-$C_{12}$-, besonders $C_1$-$C_6$-Alkyl, Cyclopentyl oder Cyclohexyl dar. Bedeutet $R^{21}$ die Gruppe -OCO-$R^{23}$, so stellt $R^{23}$ bevorzugt $C_1$-$C_{12}$-, besonders $C_1$-$C_6$-Alkyl, Phenyl oder Benzyl dar.

In der Gruppe $-COOR^{22}OH$ für $R^{21}$ gelten die zuvor für $R^{22}$ angegebenen Bevorzugungen.

In einer bevorzugten Ausführungsform stehen $R^{19}$ für H, $R^{20}$ für H, F, Cl, Methyl oder Ethyl, und $R^{21}$ für F, Cl, CN, $C_1$-$C_4$-Alkyl, $C_1$-$C_6$-Alkoxy, -COO-$C_1$-$C_6$-Alkyl, -COO-$R^{22}$-OH, -OOC-$C_1$-$C_6$-Alkyl oder Phenyl.

Eine bevorzugte Zusammensetzung ist dadurch gekennzeichnet, dass $R^{17}$ für Methyl steht; $R^{18}$ einen Rest $-R^{22}$-O-CO-$C_mH_nX^2_o$ darstellt, worin m für eine Zahl von 1 bis 6, n für 0 oder eine Zahl von 1 bis 12 und o für eine Zahl von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_2$ darstellt; $R^{19}$ H bedeutet; $R^{20}$ H, F, Cl oder $C_1$-$C_4$-Alkyl ist; und $R^{21}$ H,F, Cl, CN, $R^{23}$-O-, $C_1$-$C_6$-Alkyl, $-COOR^{23}$, -O-CO-$R^{23}$, $-COOR^{22}$-OH,

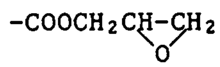

oder Phenyl darstellt, $R^{22}$ die zuvor angegebene Bedeutung hat und $R^{23}$ $C_1$-$C_6$-Alkyl, $C_5$- oder $C_6$-Cycloalkyl, Phenyl oder Benzyl ist.

Eine andere bevorzugte Zusammensetzung ist dadurch gekennzeichnet, dass $R^{17}$ Methyl ist; $R^{18}$ einen Rest $-R^{22}$-O-CO-$C_mH_nX^2_o$ darstellt, worin m für eine Zahl von 1 bis 4, n für 0 oder eine Zahl von 1 bis 8 und o für eine Zahl von 1 bis 13 stehen , und die Summe von n + o = 2 m + 1 ist, $X^2$ Cl bedeutet; $R^{22}$ lineares $C_2$-$C_6$-Alkylen oder $-CH_2CHOHCH_2$- darstellt; $R^{19}$ und $R^{20}$ H bedeuten; und $R^{21}$ $-COOR^{22}OH$ oder $-COOR^{23}$ bedeuten, worin $R^{22}$ die zuvor angegebene Bedeutung hat und $R^{23}$ $C_1$-$C_6$-Alkyl ist.

Besonders bevorzugt sind Zusammensetzungen, worin in Formel III $R^{17}$ für H oder $CH_3$ und $R^{22}$ für lineares oder verzweigtes $C_2$-$C_6$-Alkylen, Cyclopentylen oder Cyclohexylen stehen, und in Formel IV $R^{19}$ H bedeutet, $R^{20}$ H oder Methyl darstellt, und $R^{21}$ $-COOR^{23}$ oder $-COOR^{22}OH$ bedeutet, und $R^{22}$ und $R^{23}$ die zuvor angegebenen Bedeutungen haben, einschliesslich der bevorzugten Bedeutungen.

Eine weitere bevorzugte Ausführungsform ist dadurch gekennzeichnet, dass es sich bei dem thermoplastischen Polymer der Komponente a) um ein Homo- oder Copolymer des Vinylalkohols handelt, in dem das H-Atom der sekundären OH-Gruppe mindestens teilweise mit einer Gruppe -Y-$C_mH_nX^2_o$ substituiert ist, worin Y eine direkte Bindung, -CO- oder $-R^{26}$-O-CO-bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

Bevorzugt sind Copolymere enthalten.

Bevorzugt sind solche Zusammensetzungen, worin das Copolymer

a) 90 bis 0,1 Mol% Struktureinheiten der Formel VII

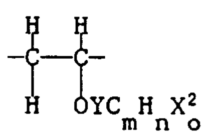 (VII),

und

b) 99,9 bis 10 Mol% gleiche oder verschiedene Struktureinheiten der Formel VIII

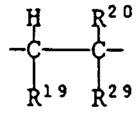 (VIII),

enthält, worin Y eine direkte Bindung, -CO- oder $-R^{26}$-O-CO-bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder $-COOR^{23}$ bedeutet; $R^{20}$ für H, F, Cl, CN oder $C_1$-$C_6$-Alkyl steht; und $R^{29}$ H, F, Cl, CN, OH, $R^{23}$O-, $C_1$-$C_{12}$-Alkyl, $-COOR^{23}$, -O-CO-$R^{23}$, $-OR^{22}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)-benzyl darstellt und $R^{22}$ unsubstituiertes oder mit $C_1$-$C_{16}$-Alkyl substituiertes Ethylen ist.

Bevorzugt sind 70 bis 10, besonders 60 bis 20 Mol% Struktureinheiten der Formel VII, und 30 bis 90, besonders 40 bis 80 Mol% Strukturelemente der Formel VIII enthalten.

Für die Bedeutungen von $R^{19}$ und $R^{20}$ in Formel VIII gelten die zuvor angegebenen Bevorzugungen. Für die Bedeutungen von $R^{22}$ und $R^{23}$ gelten ebenfalls die zuvor angegebenen Bevorzugungen.

$R^{29}$ steht bevorzugt für H, F, Cl, CN, OH, $R^{23}$-O-, $C_1$-$C_4$-Alkyl, -$COOR^{23}$, -O-CO-$R^{23}$, Phenyl, -$OCH_2CH_2OH$ oder -$OCH_2CH(CH_3)OH$, wobei $R^{23}$ $C_1$-$C_6$-Alkyl ist.

Insbesondere sind solche Zusammensetzungen bevorzugt, worin $R^{19}$ und $R^{20}$ H sind und $R^{29}$ -$OCOR^{23}$ darstellt, worin $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, Benzyl, ($C_1$-$C_{12}$-Alkyl)phenyl oder ($C_1$-$C_{12}$-Alkyl)benzyl darstellt.

Eine bevorzugte Ausführungsform ist dadurch gekennzeichnet, dass Y eine direkte Bindung, -CO-, -$CH_2CH_2O$-CO- oder -$CH_2CH(CH_3)O$-CO- ist, $X^2$ Cl bedeutet, m eine Zahl von 1 bis 6, n 0 oder eine Zahl von 1 bis 12 und o eine Zahl von 1 bis 13 sind und die Summe von $n + o = 2m + 1$ ist; $R^{19}$ und $R^{20}$ H bedeuten; und $R^{29}$ H, F, Cl, CN, OH, $R^{23}$O-, $C_1$-$C_4$-Alkyl, -$COOR^{23}$, -O-CO-$R^{23}$, Phenyl, -$OCH_2CH_2OH$ oder -$OCH_2CH(CH_3)OH$ darstellt; und $R^{23}$ $C_1$-$C_6$-Alkyl, $C_5$- oder $C_6$-Cycloalkyl, Phenyl oder Benzyl ist.

Ein weiterer Gegenstand der Erfindung ist eine Zusammensetzung, enthaltend

a) ein thermoplastisches Polymer, das an ein Polymerrückgrat über eine Gruppe -O-, -O-CO-, -CO-$OR^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_2$, Benzylen oder Xylylen darstellt, und

b) eine Verbindung der Formel I und/oder der Formel Ia

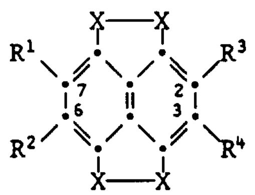 (I), 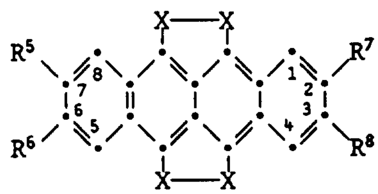 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

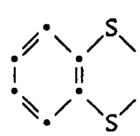 oder 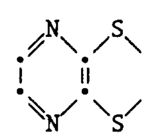 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für -$COR^9$ und $R^8$ für H oder -$COR^9$, oder $R^5$ und $R^6$ für H und $R^7$ und $R^8$ zusammen für -CO-O-CO- oder -CO-$NR^{10}$-CO- stehen, worin $R^9$ Halogen, -OH, -$NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist, und

c) gegebenenfalls ein inertes organisches Lösungsmittel.

Die erfindungsgemässe Zusammensetzung kann zusätzlich ein Lösungsmittel für ein lösliches Polymer und die Komponente b) enthalten. Geeignete Lösungsmittel sind z.B. polare, aprotische Lösungsmittel, die alleine oder in Mischungen aus mindestens zwei Lösungsmitteln verwendet werden können. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1,-Trichlorethan, 1,1,2,2-Tetrachlorethan, Carbonsäureester und Lactone wie Essigsäureethylester, Propionsäuremethylester, Benzoesäureethylester, 2-Methoxyethylacetat, γ-Butyrolacton, δ-Valerolacton und Pivalolacton, Carbonsäureamide und Lactame wie N-Methylformamid, N,N-Dimethylformamid, N,N-Diethylformamid, N,N-Dimethylacetamid, N,N-Diethylacetamid, γ-Butyrolactam, ε-Caprolactam, N-Methylpyrrolidon, N-Acetylpyrrolidon, N-Methylcaprolactam, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Dichlorbenzol, 1,2,4-Trichlorbenzol, Nitrobenzol, Toluol und Xylol.

Die erfindungsgemässe Zusammensetzung kann zusätzlich für die Verarbeitung und Anwendung benötigte Hilfsmittel enthalten, z.B. Weichmacher, Verlaufmittel, Formtrennmittel, Füllstoffe, Flammschutzmittel, Antioxidantien und Lichtschutzmittel, Stabilisatoren, Farbstoffe und Pigmente.

Besonders bevorzugt enthält die erfindungsgemässe Zusammensetzung zusätzlich ein von Komponente a) verschiedenes thermoplastisches Polymer. Beispiele für zusätzliche Polymere sind zuvor beschrieben worden. Mit dem Zusatz dieser Polymeren kann ein zu hoher Anteil des halogenierten Polymers der Komponente a) vermieden werden. Der Anteil des thermoplastischen Polymers kann z.B. bis zu 95 Gew.-%, bevorzugt bis zu 80 Gew.-% betragen, bezogen auf das halogenierte Polymer der Komponente a).

Das halogenierte Polymer der Komponente a) ist zweckmässig mindestens in einer solchen Menge enthalten, dass sie zur Bildung von CT-Komplexen aus den Verbindungen der Komponente b) genügt. Die zu verwendende Menge hängt im wesentlichen vom Halogenierungsgrad der Seitengruppen des Polymeren a) und dem Anteil solcher Seitengruppen im Polymeren a) ab. Die Menge kann so gewählt werden, dass pro Mol Verbindung der Formel I oder Ia 0,5 bis 2, besonders 1 bis 2 Mol Halogen (Cl, Br, I) in den Seitengruppen des Polymers der Komponente a) enthalten sind. Vorteilhaft wird ein Ueberschuss des Polymeren a) verwendet.

Die Komponente b) ist bevorzugt in einer Menge von 0,01 bis 20 Gew.-%, besonders 0,05 bis 10 Gew.-% und insbesondere 0,1 bis 5 Gew.-% enthalten, bezogen auf das Polymer der Komponente a).

Im übrigen gelten für diese erfindungsgemässe Zusammensetzung die zuvor angegebenen Bevorzugungen.

Die Herstellung dieser erfindungsgemässen Zusammensetzung erfolgt durch einfaches Vermischen der Komponenten, gegebenenfalls unter Mitverwendung eines Lösungsmittels. Mit dem Vermischen kann auch eine Formgebung verbunden sein, unter Anwendung bekannter Methoden wie z.B. Giessen, Spritzgiessen, Kalandrieren oder Extrusion.

Ein weiterer Gegenstand der Erfindung ist ein Verfahren zur Herstellung der erfindungsgemässen CT-Komplexe enthaltenden Zusammensetzungen, das dadurch gekennzeichnet ist, dass man

a) ein thermoplastisches Polymer, das an ein Polymerrückgrat über eine Gruppe -O-, -O-CO-, -CO-OR$^{22}$-OCO- oder -CO-O- gebundene aliphatische oder cycloaliphatische Seitengruppen enthält, die in $\alpha$-, $\beta$-, $\gamma$- oder $\omega$-Stellung mindestens ein Cl-, Br- oder I-Atom enthalten, auf eine Verbindung der Formel I und/oder der Formel Ia

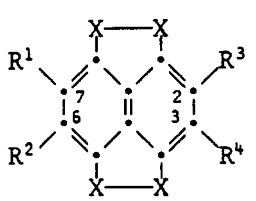 (I), 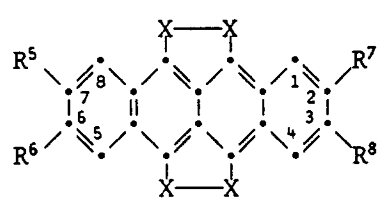 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

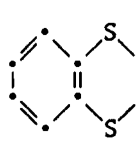 oder 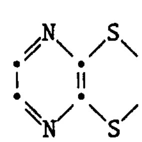 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für -CO$R^9$ und $R^8$ für H oder -CO$R^9$, oder $R^5$ und $R^6$ für H und $R^7$ und $R^8$ zusammen für -CO-O-CO- oder -CO-N$R^{10}$ -CO- stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder

der um die $NH_2$-Gruppe verminderte Rest eines primären Amins ist, einwirken lässt.

Das Verfahren wird vorteilhaft unter Zufuhr von Energie durchgeführt. Bei der Energie kann es sich z.B. um thermische Energie oder Strahlungsenergie handeln. Im Fall von Strahlungsenergie kann z.B. bildmässig durch eine Maske oder mittels bildmässiger Steuerung eines Lichtstrahls oder flächenmässig bestrahlt werden. Thermische Energie bedeutet zum Beispiel erhöhte Temperatur wie z.B. von 25 bis 350 °C, insbesondere 50 bis 200 °C.

Eine bevorzugte Ausführungsform ist dadurch gekennzeichnet, dass man es in Gegenwart eines inerten organischen Lösungsmittels durchführt, das bei Temperaturen von 25 bis 350 °C verdampft.

Eine andere bevorzugte Ausführungsform ist dadurch gekennzeichnet, dass von der Komponente a) mehr eingesetzt wird, als zur Bildung des CT-Komplexes benötigt wird.

Das halogenhaltige Polymer a) kann z.B. mit einer Verbindung der Formel I und/oder Ia, und gegebenenfalls Lösungsmitteln und zusätzlichen Polymeren vermischt werden. Gleichzeitig mit dem Vermischen kann eine Formgebung verbunden sein, z.B. durch Giessen, Spritzgiessen, Extrudieren und Kalandrieren. Die zur Bildung von CT-Komplexen notwendige Temperatur kann z.B. bei der Formgebung erzielt werden. Die Erwärmung kann aber auch nach der Formgebung vorgenommen werden. Bei der Mitverwendung von Lösungsmitteln wird vorteilhaft mit dem Erwärmen das Lösungsmittel entfernt.

Ein weiterer Gegenstand der Erfindung sind elektrisch leitende oder antistatisch ausgerüstete Zusammensetzungen, die nach dem erfindungsgemässen Verfahren erhältlich sind.

Die erfindungsgemässen, einen CT-Komplex enthaltenden Zusammensetzungen stellen wertvolle Halbzeuge oder geformte Gegenstände, Formteile dar, z.B. Folien, Filme, Fäden, Fasern, Verbundstoffe oder Beschichtungen, die antistatisch ausgerüstet oder elektrisch leitend sind.

Ein weiterer Gegenstand der Erfindung ist die Verwendung der erfindungsgemässen eine Verbindung der Formeln I oder Ia enthaltenden Zusammensetzung zur Herstellung von a) antistatisch ausgerüsteten und/oder b) elektrisch leitenden Formteilen, Folien, Fäden, Fasern, Beschichtungen oder Verbundstoffen.

Ein weiterer Gegenstand sind geformte Gegenstände, Filme, Beschichtungen und Verbundstoffe aus einer erfindungsgemässen, einen CT-Komplex enthaltenden Zusammensetzung.

Ein bevorzugter Anwendungsbereich ist die Herstellung von Beschichtungen oder Folien durch z.B. Extrusion oder nach Giess- bzw. Streichverfahren. Sie können für die elektrostatische Abschirmung von Bauteilen verwendet werden. Die Folien stellen flexible elektrische Leiter dar, aus denen Elektroden z.B. für Displayelemente hergestellt werden können. Je nach verwendetem Polymer bzw. Polymergemisch sind auch transparente Ausführungsformen möglich.

Die erfindungsgemässen, einen CT-Komplex enthaltenden Zusammensetzungen zeichnen sich durch eine hohe chemische Stabilität und Temperaturbeständigkeit und eine geringe Migration der CT-Komplexe aus. Ferner werden überraschend hohe Leitfähigkeiten erzielt, die bis zu 25 % der Leitfähigkeit der reinen CT-Komplexe betragen können. Die CT-Komplexe bilden ein Netzwerk aus elektrisch leitenden Kristallnadeln in der Polymermatrix. Die hohe Stabilität bedingt nur einen geringen oder keinen Verlust der elektrischen Leitfähigkeit beim Gebrauch.

Die Herstellung der thermoplastischen Polymeren der Komponente a) kann in an sich bekannter Weise dergestalt erfolgen, dass man ein Carboxylgruppen enthaltendes Polymer oder seine esterbildenden Derivate (z.B. Polymethacrylsäure oder Ester davon) mit einem Cl-, Br- und/oder I-substituierten Alkohol verestert, oder ein Hydroxylgruppen enthaltendes Polymer (z.B. Polyaddukte aus Verbindungen mit 2 Epoxidgruppen oder deren hydroxyalkylierten Derivate, Polymethacrylsäurehydroxyalkylester, Polyvinylalkohole oder deren hydroxyalkylierten Derivate) mit einem Cl-, Br- oder I-substituierten Alkohol verethert, oder einer Cl-, Br- oder I-substituierten Carbonsäure oder ihrer esterbildenden Derivate wie z.B. Ester oder Säurehalogenide, verestert. Die Reaktion wird zweckmässig in einem Lösungsmittel und bei Temperaturen von -20 °C bis 100 °C durchgeführt. Das gewünschte Polymer kann z.B. isoliert werden, indem man die flüchtigen Bestandteile gegebenenfalls im Vakuum verdampft, oder das Polymer aus der Reaktionslösung mit Wasser fällt und trocknet. Hierbei können jedoch durch Hydrolyse halogenierte Carbonsäurereste teilweise wieder abgespalten werden.

Ein weiterer Gegenstand der Erfindung ist ein Homo- oder Copolymer aus Acrylsäure- oder Methacrylsäureestern, das in $\alpha$-, $\beta$-, $\gamma$- oder $\omega$-Stellung chlorierte, bromierte und/oder iodierte aliphatische oder cycloaliphatische Gruppen in der Estergruppe enthält.

Bevorzugt sind solche Homo- und Copolymere, worin die Estergruppe an das O-Atom der Carboxylgruppe gebundene Gruppen

$$-(R^{22}-O-CO)_z-C_mH_nX^2_o$$

enthält, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt.

Eine bevorzugte Ausführungsform ist dadurch gekennzeichnet, dass das Homo- oder Copolymer

a) 0,1 bis 100 Mol-% mindestens eines Strukturelements der Formel III

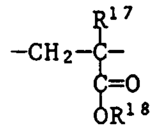
(III),

und

b) 0 bis 99,9 Mol-% mindestens eines Strukturelements der Formel IV

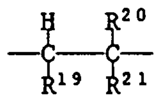
(IV)

enthält, bezogen auf das Polymer, worin $R^{17}$ für H oder Methyl steht; $R^{18}$ einen Rest

$$-(R^{22}-O-CO)_z-C_mH_nX^2_o$$

darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

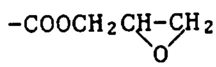

oder Phenyl darstellt, $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt.

Eine besonders bevorzugte Ausführungsform ist dadurch gekennzeichnet, dass $R^{17}$ für Methyl steht; $R^{18}$ einen Rest -$R^{22}$-O-CO-$C_mH_nX^2_o$ darstellt, worin m für eine Zahl von 1 bis 6, n für 0 oder eine Zahl von 1 bis 12 und o für eine Zahl von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_2$ darstellt; $R^{19}$ H bedeutet; $R^{20}$ H, F, Cl oder $C_1$-$C_4$-Alkyl ist; und $R^{21}$ H,F, Cl, CN, $R^{23}$-O-, $C_1$-$C_6$-Alkyl, -$COOR^{23}$, -O-CO-$R^{23}$, -$COOR^{22}$-OH,

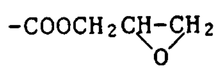

oder Phenyl darstellt, $R^{22}$ die zuvor angegebene Bedeutung hat und $R^{23}$ $C_1$-$C_6$-Alkyl, $C_5$- oder $C_6$-Cycloalkyl, Phenyl oder Benzyl ist.

$R^{18}$ entspricht insbesondere einem Rest -$R^{22}$-O-CO-$C_mH_nX^2_o$ worin $R^{22}$ lineares oder verzweigtes $C_2$-$C_6$-Alkylen bedeutet, $X^2$ für Cl steht und m eine Zahl von 1 bis 4, n 0 oder eine Zahl von 1 bis 8 und o eine Zahl von 1 bis 9 darstellen, und die Summe von n + o = 2 m + 1 ist.

Die Gruppe $-C_mH_nX^2_o$ steht besonders für $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$.

Ein Gegenstand der Erfindung ist auch ein Homo- oder Copolymer, dadurch gekennzeichnet, dass es sich um ein lineares Polyaddukt aus einer Glycidylverbindung mit durchschnittlich mehr als einer Epoxidgruppe und einem Diol, primären Monoamin, disekundären Diamin, disekundären linearen oder cyclischen Dicarbonsäurediamid oder einer Dicarbonsäure handelt, in dem das H-Atom der sekundären OH-Gruppen mindestens teilweise durch eine Gruppe $-CO-C_mH_nX^2_o$ substituiert ist, worin m für eine Zahl von 1 bis 12, n für 0 oder eine Zahl von 1 bis 24 und o eine Zahl von 1 bis 25 sind, und die Summe von $n + o = 2m + 1$ ist, und $X^2$ für Cl, Br oder I steht.

Eine bevorzugte Ausführungsform ist dadurch gekennzeichnet, dass das Polyaddukt

a) 100 bis 0,1 Mol-% gleiche oder verschiedene Struktureinheiten der Formel V

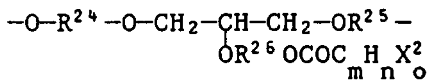 (V)

und

b) 99,9 bis 0 Mol-% gleiche oder verschiedene Struktureinheiten der Formel VI

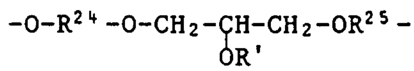 (VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R' H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, $-OR^{26}$- eine direkte Bindung oder $R^{26}$ unsubstituiertes oder mit $C_1$-$C_{16}$-Alkyl substituiertes Ethylen darstellen, und $X^2$, m, n und o die zuvor angegebenen Bedeutungen haben.

Insbesondere sind $R^{24}$ und $R^{25}$ unabhängig voneinander ein Rest der Formel

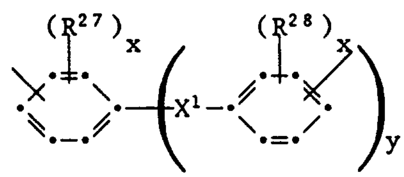

worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, -N($C_1$-$C_4$-Alkyl)- oder $-Si(CH_3)_2-$ bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

Ganz besonders bedeuten $R^{24}$ und $R^{25}$ den Rest

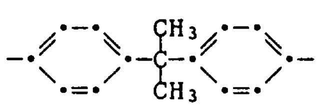 .

Eine bevorzugte Ausführungsform ist dadurch gekennzeichnet, dass $-OR^{26}$-eine direkte Bindung darstellt, $X^2$ für Cl steht und m eine Zahl von 1 bis 4, n 0 oder eine Zahl von 1 bis 8 und o eine Zahl von 1 bis 9 darstellen, und die Summe von $n + o = 2m + 1$ ist.

Eine besonders bevorzugte Ausführungsform ist dadurch gekennzeichnet, dass die Gruppe $-C_mH_nX^2_o$ $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$ steht.

Ein weiterer Gegenstand der Erfindung ist ein Homo- oder Copolymer, dadurch gekennzeichnet, dass es sich um ein Homo- oder Copolymer des Vinylalkohols handelt, in dem das H-Atom der sekundären OH-Gruppe mindestens teilweise mit einer Gruppe $-Y^1-C_mH_nX^1_o$ substituiert ist, worin $Y^1$ -CO- oder $-R^{26}$-O-CO- bedeutet, $X^1$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

Bevorzugt ist ein Homo- oder Copolymer, das dadurch gekennzeichnet ist, dass das Copolymer

a) 90 bis 0,1 Mol% Struktureinheiten der Formel VII

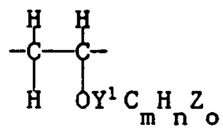 (VII),

und

b) 99,9 bis 10 Mol% gleiche oder verschiedene Struktureinheiten der Formel VIII

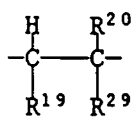 (VIII),

enthält, worin $Y^1$ -CO- oder $-R^{26}$-O-CO- bedeutet, $X^2$ für Cl, Br oder I steht, m eine Zahl von 1 bis 12, n 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder $-COOR^{23}$ bedeutet; $R^{20}$ für H, F, Cl, CN oder $C_1$-$C_6$-Alkyl steht und $R^{29}$ H, F, Cl, CN, OH, $R^{23}O$-, $C_1$-$C_{12}$-Alkyl, $-COOR^{23}$, $-O-CO-R^{23}$, $-OR^{22}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{22}$ unsubstituiertes oder mit $C_1$-$C_{16}$-Alkyl substituiertes Ethylen ist.

Eine bevorzugte Ausführungsform ist dadurch gekennzeichnet, dass $Y^1$ -CO-, $-CH_2CH_2O-CO-$ oder $-CH_2CH(CH_3)O-CO-$ ist, $X^2$ Cl bedeutet, m eine Zahl von 1 bis 6, n 0 oder eine Zahl von 1 bis 12 und o eine Zahl von 1 bis 13 sind und die Summe von n + o = 2 m + 1 ist; $R^{19}$ und $R^{20}$ H bedeuten; und $R^{29}$ H, F, Cl, CN, OH, $R^{23}O$-, $C_1$-$C_4$-Alkyl, $-COOR^{23}$, $-O-CO-R^{23}$, Phenyl, $-OCH_2CH_2OH$ oder $-OCH_2CH(CH_3)OH$ darstellt; und $R^{23}$ $C_1$-$C_6$-Alkyl, $C_5$- oder $C_6$-Cycloalkyl, Phenyl oder Benzyl ist.

Bevorzugt ist, dass $X^2$ für Cl steht und m eine Zahl von 1 bis 4, n 0 oder eine Zahl von 1 bis 8 und o eine Zahl von 1 bis 9 darstellen, und die Summe von n + o = 2 m + 1 ist.

Insbesondere steht die Gruppe $-C_mH_nX^2_o$ für $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$.

Im übrigen gelten für die erfindungsgemässen Polymeren die zuvor für die erfindungsgemässen Zusammensetzungen angegebenen Bevorzugungen. Es wurde gefunden, dass die Polymeren neben ihrer Eigenschaft zur Bildung von CT-Komplexen mit den Verbindungen der Formeln I und Ia bei Thermoplasten und Duroplasten die Haftfestigkeit auf Substraten wie z.B. Metallen, Holz, Glas und Kunststoffen, wesentlich verbessern können, wobei die erfindungsgemässen Polymeren den Thermoplasten bzw. Duroplasten nur in geringen Mengen, z.B. bis zu 5 Gew.-%, einverleibt werden können.

Die nachfolgenden Beispiele erläutern die Erfindung näher.

A) Herstellungsbeispiele

Beispiele 1-7: Herstellung von

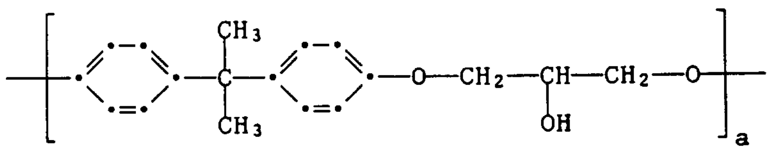

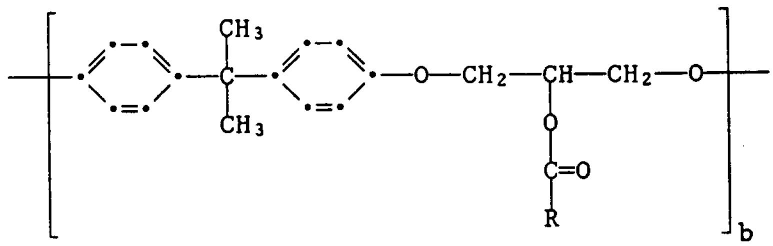

28,4 g eines Polyadditionspolymeren aus Bisphenol-A und Bisphenol-A-diglycidylether (Mw = 20000) wird in 200 ml Dimethylformamid und 60 ml Pyridin gelöst. Bei 0 ° C werden unter Rühren und Feuchtigkeitsausschluss 12,1 g Chloressigsäurechlorid zugetropft. Man lässt noch 8 h bei Raumtemperatur rühren und fällt anschliessend in Wasser. Das isolierte Polymer des Beispiels 3 wird bei 80 ° C im Hochvakuum getrocknet. Der Gehalt an eingebauten Chloressigesterresten wird aus der Elementaranalyse bestimmt.

In analoger Weise werden die Polymeren in Tabelle 1 hergestellt.

Tabelle 1

| Beispiel Nr. | R | n (berechnet) $(n = \frac{b}{a+b})$ | n (gefunden) $(n = \frac{b}{a+b})$ | Tg (°C) | $\overline{M}_w$ [1)] |
|---|---|---|---|---|---|
| 1 | $-CH_2Cl$ | 0,1 | 0,05 | | 44100 |
| 2 | $-CH_2Cl$ | 0,5 | 0,25 | 104 | 26500 |
| 3 | $-CH_2Cl$ | 1,0 | 0,75 | 83 | 26600 |
| 4 | $-CCl_3$ | 0,1 | 0,05 | | 79000 |
| 5 | $-CCl_3$ | 1,0 | 1,0 | 66 | 94000 |
| 6 | $-CHCl-CH_2Cl$ | 0,1 | 0,03 | 102 | 65000 |
| 7 | $-CHCl-CH_2Cl$ | 0,5 | 0,25 | | 18000 |

[1)] Bestimmt durch Gelpermeationschromatographie

Beispiel 8: 27,8 g (0,19 Mol) Methacrylsäureglycidylester und 122,92 g (1,08 Mol) Methacrylsäureethylester werden in 600 ml Dioxan unter Stickstoff und Rühren auf 70 ° C erhitzt und mit 750 mg AiBN versetzt. Nach 16 h wird das entstandene Polymer durch Ausfällen in Eisuasser isoliert. Ausbeute: 130,57 g (87 %), Epoxydgehalt: 1,27 mÄq/g (theor. 1,267 mÄq/g), M = 86'000.

7,87 g Polymer (10 mMol Epoxydgruppen) werden in 80 ml Dioxan gelöst und bei Raumtemperatur tropfenweise mit 0,8 ml (0,01 Mol) Chloracetylchlorid und 2,4 ml Pyridin versetzt. Nach beendeter Zugabe erwärmt man für 1 h auf 50 ° C, lässt dann abkühlen und isoliert das Polymere durch Fällung in Diethylether.

$\overline{M}_w$ = 32'700, $T_g$: 78 °C, Chlorgehalt: 6,54 % (berechnet: 7,86 %).

Beispiel 9: Es wird wie in Beispiel 8 verfahren, aber 0,005 mol Benzoylchlorid anstelle von Chloracetylchlorid verwendet.
$\overline{M}_w$ = 17'300, $T_g$ : 92 °C, Chlorgehalt: 1,2 % (berechnet: 2,1 %).

Umsetzung mit Carbonsäuren

Beispiel 10: 7,87 g (0,01 Mol Epoxidgruppen) Poly(methacrylsäureethylester-methacrylsäureglycidylester -85/15) hergestellt nach dem Verfahren gemäss Beispiel 8 werden in 100 ml Dioxan gelöst und mit 1,71 g (0,01 Mol) 2,3-Dichlorpropionsäure und 96 mg Benzyltrimethylammoniumchlorid versetzt. Nach 10 h Rückfluss lässt man abkühlen und isoliert das umgesetzte Polymer durch Fällen in Eiswasser.
Ausbeute: 87,6 %, $T_g$ : 93 °C, Chlorgehalt: 4,33 % (berechnet: 7,74 %).

Beispiel 11: Es wird wie in Beispiel 10 verfahren, aber 0,01 mol Chloressigsäure anstelle von 2,3-Dichlorpropionsäure verwendet.
$\overline{M}_w$ = 127'000, $T_g$ : 88 °C, Chlorgehalt: 1,6 % (berechnet: 4,02 %).

B) Anwendungsbeispiele:

Beispiele 12-23: 1,6 mg Tetraselenotetracen (TSeT) werden in 9 ml Dimethylformamid (DMF) bei 120 °C gelöst und zu einer Lösung von 100 mg Polymer nach Beispiel 1 in 1 ml DMF gegeben. Dann giesst man die Lösung auf eine vorgeheizte Glasplatte. Nach Abdampfen des Lösungsmittels bei Temperaturen zwischen 90-130 °C verbleibt ein transparenter Film mit einem Nadelnetzuerk aus Kristallnadeln von elektrisch leitendem $(TSeT)_2$-Chlorid in einer Polymermatrix. Die Filme nach Beispielen 13 bis 23 in den Tabellen 2 und 3 werden in gleicher Weise hergestellt, wobei gemäss Beispielen 16 bis 23 ein zusätzliches Polymer (Polymer 2) mitverwendet wird. Die Leitfähigkeit der Filme liegt zwischen 0,1 bis 1 S/cm.

Tabelle 2:

| Beispiel Nr. | Polymer gemäss Beispiel Nr. | $\frac{\text{TSeT (mg)}}{\text{Polymer (mg)}} \cdot 100$ | Morphologie des Nadelnetzwerkes [1]) |
|---|---|---|---|
| 12 | 7 | 1,6 | + |
| 13 | 1 | 1,6 | ++ |
| 14 | 2 | 1,6 | + |
| 15 | 6 | 1,6 | ++ |

[1]) + flächig homogene Nadelnetzwerke (elektrisch leitend)
++ unregelmässige Nadelnetzwerke (elektrisch leitend)

Tabelle 3:

| Beispiel Nr. | Polymer (1) gemäss Beispiel Nr. | Polymer 2 | Polymer(1)in g / Polymer(2)in g | TSeT (mg) | Morphologie des Nadelnetzwerkes |
|---|---|---|---|---|---|
| 16 | 5 | Polyimid 1) | 0,43 | 1,6 | + 4) |
| 17 | 7 | Polyimid 1) | 1 | 1,6 | + 4) |
| 18 | 5 | Polyimid 1) | 0,1 | 1,5 | ++ |
| 19 | 7 | Polyimid 1) | 0,05 | 1,6 | - 3) |
| 20 | 7 | Polyimid 1) | 0,1 | 1,6 | ++ |
| 21 | 1 | Phenoxypolymer 2) | 1,0 | 1,6 | + |
| 22 | 1 | Phenoxypolymer 2) | 9 | 1,6 | ++ |
| 23 | 1 | Phenoxypolymer 2) | 0,1 | 1,5 | (-) |

1) Polyimid aus Benzophenontetracarbonsäuredianhydrid, Diaminodurol und 3,3'-Dimethyl-5,5'-diethyl-4,4'-diaminodiphenylmethan ($\overline{M}_w$=40000).

2) Polyaddukt aus Bisphenol-A und Bisphenol-A-Diglycidylether ($\overline{M}_w$=20000)

3) kurze Nadeln, nicht vollflächig leitend

4) opake Folien (Entmischung der Polymeren)

Beispiele 24-27: 100 mg Polymer werden in 2 ml DMF bei 120 °C gelöst. Diese Lösung gibt man unter kräftigem Rühren zu einer 120 °C heissen Lösung von 1,6 mg 2-Fluortetraselenotetracen in DMF und giesst sie in 100-140 °C warme Petrischalen. Nach Abdampfen des Lösungsmittels verbleiben elektrisch leitende Polymerfilme. Die elektrische Leitfähigkeit wird nach der 4-Punktemethode bestimmt (siehe Tabelle 4).

Tabelle 4

| Beispiel | Polymer gemäss Beispiel | Leitfähigkeit Ω ($Ohm^{-1}cm^{-1}$) |
|---|---|---|
| 24 | 8 | 0,21 |
| 25 | 9 | 0,08 |
| 26 | 10 | 0,01 |
| 27 | 11 | 0,12 |

## Patentansprüche

**1.** Zusammensetzung, enthaltend

a) ein in einem inerten organischen Lösungsmittel lösliches thermoplastisches Polymer, das an ein Polymerrückgrat über eine Gruppe -O-, -O-CO-, -CO-OR$^{22}$-OCO- oder -CO-O- gebundene aliphatische oder cycloaliphatische Seitengruppen enthält, die in α-, β-, γ- oder ω-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$(CH_2)_2$, Benzylen oder Xylylen darstellt, und

b) einen Charge-Transfer-Komplex (CT-Komplex), der aus Chlor, Brom oder Iod und einer Verbindung der Formel I oder Ia oder Mischungen davon gebildet ist,

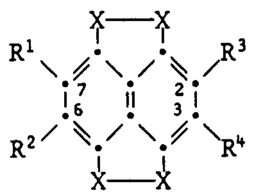 (I), 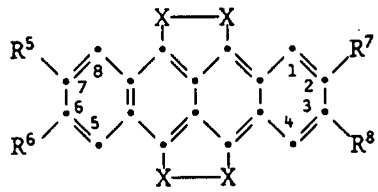 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

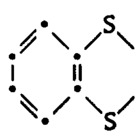 oder 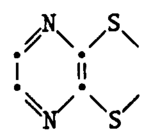 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für $-COR^9$ und $R^8$ für H oder $-COR^9$, oder $R^5$ und $R^6$ für H und $R^7$ und $R^8$ zusammen für -CO-O-CO- oder $-CO-NR^{10}-CO-$ stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist.

**2.** Zusammensetzung gemäss Anspruch 1, dadurch gekennzeichnet, dass die Komponente b) in einer Menge von 0,01 bis 20 Gew.-% enthalten ist, bezogen auf das Polymer a).

**3.** Zusammensetzung gemäss Anspruch 1, dadurch gekennzeichnet, dass der CT-Komplex aus einer Verbindung der Formel Ia gebildet ist und Tetrathiotetracen, Tetraselenotetracen, 2-Fluor- oder 2,3-Difluortetraselenotetracen darstellt.

**4.** Zusammensetzung gemäss Anspruch 1, dadurch gekennzeichnet, dass der CT-Komplex aus Chlor und einer Verbindung der Formel Ia gebildet ist.

**5.** Zusammensetzung gemäss Anspruch 1, dadurch gekennzeichnet, dass es sich bei dem CT-Komplex um $(Tetraselenotetracen)_2Cl$ handelt.

**6.** Zusammensetzung gemäss Anspruch 1, dadurch gekennzeichnet, dass der CT-Komplex in Form eines Nadelnetzwerkes aus Kristallnadeln ausgebildet ist.

**7.** Zusammensetzung gemäss Anspruch 1, dadurch gekennzeichnet, dass sie bis zu 95 Gew.-%, bezogen auf das Polymer a), mindestens eines von Komponente a) verschiedenen thermoplastischen oder elastomeren Polymeren enthält.

**8.** Zusammensetzung gemäss Anspruch 7, dadurch gekennzeichnet, dass es sich bei dem thermoplastischen Polymer um Polymere von Mono- und Diolefinen; Copolymere von Mono- und/oder Diolefinen; Polystyrol, Poly-(p-methylstyrol), Poly-($\alpha$-methylstyrol); Copolymere von Styrol oder $\alpha$-Methylstyrol; Pfropfcopolymere von Styrol oder $\alpha$-Methylstyrol; halogenhaltige Polymere; Polymere und Copolymere von Derivaten $\alpha,\beta$-ungesättigter Säuren; Polymere, die sich von Acylderivaten oder Acetaten ungesättigter Alkohole ableiten; Homo- und Copolymere von cyclischen Ethern; Polyacetale; Polyphenylenoxide und -sulfide und deren Mischungen mit Styrolpolymeren; Polyurethane; Polyharnstoffe; Polyimide; Polybenzimidazole; Polycarbonate; Polyester; Polyestercarbonate; Polysulfone; Polyethersulfone; Polyetherketone; Polyvinylcarbazol; Polyaddukte von gegebenenfalls hydroxyalkylierten Epoxidverbindungen mit durchschnittlich mehr als einer Epoxidgruppe im Molekül und Diolen, primären Monoaminen,

disekundären Diaminen, disekundären linearen oder cyclischen Dicarbonsäurediamiden oder Dicarbonsäuren; Derivate von Cellulose; mit Schwefel vernetzte Produkte aus Doppelbindungen enthaltenden Polymeren; und Mischungen der vorgenannten Polymeren handelt.

**9.** Zusammensetzung gemäss Anspruch 1, dadurch gekennzeichnet, dass das thermoplastische Polymer der Komponente a) ein Homo- oder Copolymer eines Acrylsäure- oder Methacrylsäureesters ist, das chlorierte, bromierte und/oder iodierte aliphatische oder cycloaliphatische Gruppen in der Estergruppe enthält.

**10.** Zusammensetzung gemäss Anspruch 9 ,dadurch gekennzeichnet, dass das Polymer
a) 0,1 bis 100 Mol-% mindestens eines Strukturelements der Formel III

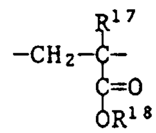

(III),

und
b) 0 bis 99,9 Mol-% mindestens eines Strukturelements der Formel IV

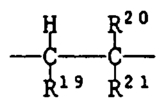

(IV)

enthält, bezogen auf das Polymer, worin $R^{17}$ für H oder Methyl steht; $R^{18}$ einen Rest

$$-(R^{22}-O-CO)_z-C_mH_nX^2_o$$

darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

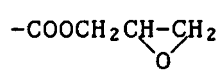

oder Phenyl darstellt, worin $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt.

**11.** Zusammensetzung gemäss Anspruch 10, dadurch gekennzeichnet, dass $R^{17}$ für Methyl steht; $R^{18}$ einen Rest -$R^{22}$-O-CO-$C_mH_nX^2_o$ darstellt, worin m für eine Zahl von 1 bis 6, n für 0 oder eine Zahl von 1 bis 12 und o für eine Zahl von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_2$ darstellt; $R^{19}$ H bedeutet; $R^{20}$ H, F, Cl oder $C_1$-$C_4$-Alkyl ist; und $R^{21}$ H,F, Cl, CN, $R^{23}$-O-, $C_1$-$C_6$-Alkyl, -$COOR^{23}$, -O-CO-$R^{23}$, -$COOR^{22}$-OH,

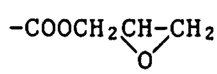

oder Phenyl darstellt, $R^{22}$ die zuvor angegebene Bedeutung hat und $R^{23}$ $C_1$-$C_6$-Alkyl, $C_5$- oder $C_6$-Cycloalkyl, Phenyl oder Benzyl ist.

**12.** Zusammensetzung gemäss Anspruch 10, dadurch gekennzeichnet, dass $R^{17}$ Methyl ist; $R^{18}$ einen Rest $-R^{22}O-CO-C_mH_nX^2_o$ darstellt, worin m für eine Zahl von 1 bis 4, n für 0 oder eine Zahl von 1 bis 8 und o für eine Zahl von 1 bis 13 stehen , und die Summe von n + o = 2 m + 1 ist, $X^2$ Cl bedeutet; $R^{22}$ lineares $C_2$-$C_6$-Alkylen oder $-CH_2CHOHCH_2-$ darstellt; $R^{19}$ und $R^{20}$ H bedeuten; und $R^{21}$ $-COOR^{22}OH$ oder $-COOR^{23}$ bedeuten, worin $R^{22}$ die zuvor angegebene Bedeutung hat und $R^{23}$ $C_1$-$C_6$-Alkyl ist.

**13.** Zusammensetzung gemäss Anspruch 1, dadurch gekennzeichnet, dass es sich bei dem thermoplastischen Polymer der Komponente a) um ein lineares Polyaddukt aus einer Glycidylverbindung mit durchschnittlich mehr als einer Epoxidgruppe und einem Diol, primären Monoamin, disekundären Diamin, disekundären linearen oder cyclischen Dicarbonsäurediamid oder einer Dicarbonsäure handelt, in dem das H-Atom der sekundären OH-Gruppen mindestens teilweise durch eine Gruppe $-CO-C_mH_nX^2_o$ substituiert ist, worin m für eine Zahl von 1 bis 12, n für 0 oder eine Zahl von 1 bis 24 und o eine Zahl von 1 bis 25 sind, und die Summe von n + o = 2 m + 1 ist, und $X^2$ für Cl, Br oder I steht.

**14.** Zusammensetzung gemäss Anspruch 13, dadurch gekennzeichnet, dass das Polyaddukt

a) 100 bis 0,1 Mol-% gleiche oder verschiedene Struktureinheiten der Formel V

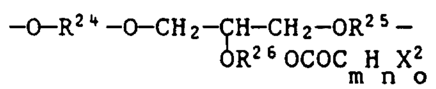 (V)

und

b) 99,9 bis 0 Mol-% gleiche oder verschiedene Struktureinheiten der Formel VI

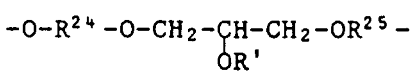 (VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R' H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, $-OR^{26}-$ eine direkte Bindung oder $R^{26}$ unsubstituiertes oder mit $C_1$-$C_{16}$-Alkyl substituiertes Ethylen darstellen, und $X^2$, m, n und o die im Anspruch 12 angegebenen Bedeutungen haben.

**15.** Zusammensetzung gemäss Anspruch 14, dadurch gekennzeichnet, dass $R^{24}$ und $R^{25}$ unabhängig voneinander einen Rest der Formel

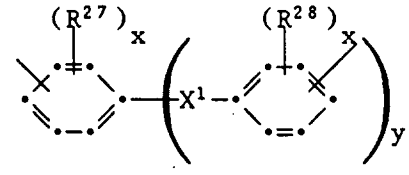

darstellen, worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, $-SO_2-$, -CO-, $-CO_2-$, $-N(C_1$-$C_4$-Alkyl$)-$ oder $-Si(CH_3)_2-$ bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

**16.** Zusammensetzung gemäss Anspruch 15, dadurch gekennzeichnet, dass $R^{24}$ und $R^{25}$ den Rest

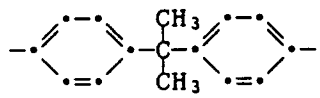

bedeuten.

**17.** Zusammensetzung gemäss Anspruch 1, dadurch gekennzeichnet, dass es sich bei dem thermoplastischen Polymer der Komponente a) um ein Homo-oder Copolymer des Vinylalkohols handelt, in dem das H-Atom der sekundären OH-Gruppe mindestens teilweise mit einer Gruppe $-Y-C_mH_nX^2_o$ substituiert ist, worin Y eine direkte Bindung, -CO- oder $-R^{26}$-O-CO- bedeutet, $X^2$ für Cl, Br oder I steht, m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

**18.** Zusammensetzung gemäss Anspruch 17, dadurch gekennzeichnet, dass das Copolymer
a) 90 bis 0,1 Mol% Struktureinheiten der Formel VII

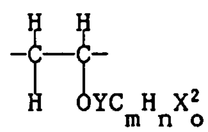

(VII),

und
b) 99,9 bis 10 Mol% gleiche oder verschiedene Struktureinheiten der Formel VIII

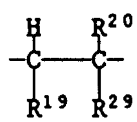

(VIII),

enthält, worin Y eine direkte Bindung, -CO- oder $-R^{26}$-O-CO-bedeutet, $X^2$ für Cl, Br oder I steht, m eine Zahl von 1 bis 12, n 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder $-COOR^{23}$ bedeutet; $R^{20}$ für H, F, Cl, CN oder $C_1$-$C_6$-Alkyl steht und $R^{29}$ H, F, Cl, CN, OH, $R^{23}O$-, $C_1$-$C_{12}$-Alkyl, $-COOR^{23}$, $-O-CO-R^{23}$, $-OR^{22}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)-phenyl, Benzyl oder ($C_1$-$C_{12}$-Alkyl)benzyl darstellt und $R^{22}$ unsubstituiertes oder mit $C_1$-$C_{16}$-Alkyl substituiertes Ethylen ist.

**19.** Zusammensetzung gemäss Anspruch 18, dadurch gekennzeichnet, dass Y eine direkte Bindung, -CO-, $-CH_2CH_2O$-CO- oder $-CH_2CH(CH_3)O$-CO- ist, $X^2$ Cl bedeutet, m eine Zahl von 1 bis 6, n 0 oder eine Zahl von 1 bis 12 und o eine Zahl von 1 bis 13 sind und die Summe von n + o = 2 m + 1 ist; $R^{19}$ und $R^{20}$ H bedeuten; und $R^{29}$ H, F, Cl, CN, OH, $R^{23}O$-, $C_1$-$C_4$-Alkyl, $-COOR^{23}$, $-O-CO-R^{23}$, Phenyl, $-OCH_2CH_2OH$ oder $-OCH_2CH(CH_3)OH$ darstellt; und $R^{23}$ $C_1$-$C_6$-Alkyl, $C_5$- oder $C_6$-Cycloalkyl, Phenyl oder Benzyl ist.

**20.** Verfahren zur Herstellung einer Zusammensetzung gemäss Anspruch 1, dadurch gekennzeichnet, dass man
a) ein thermoplastisches Polymer, das an ein Polymerrückgrat über eine Gruppe -O-, -O-CO-, -CO-$OR^{22}$-OCO- oder -CO-O- gebundene aliphatische oder cycloaliphatische Seitengruppen enthält, die in $\alpha$-, $\beta$-, $\gamma$- oder $\omega$-Stellung mindestens ein Cl-, Br- oder I-Atom enthalten, auf eine Verbindung der Formel I und/oder der Formel Ia

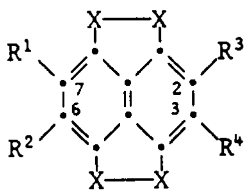 (I), 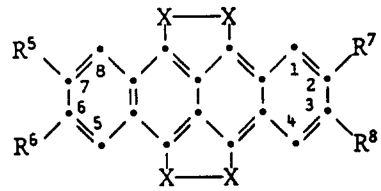 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

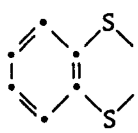 oder 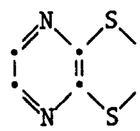 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für $-COR^9$ und $R^8$ für H oder $-COR^9$, oder $R^5$ und $R^6$ für H und $R^7$ und $R^8$ zusammen für -CO-O-CO- oder $-CO-NR^{10}-CO-$ stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist, einwirken lässt.

**21.** Verfahren gemäss Anspruch 20, dadurch gekennzeichnet, dass es bei einer Temperatur von 25 bis 350 °C durchgeführt wird.

**22.** Verfahren gemäss Anspruch 20, dadurch gekennzeichnet, dass man es in Gegenwart eines inerten organischen Lösungsmittels durchführt, das bei einer Temperatur von 25 bis 350 °C verdampft.

**23.** Zusammensetzung, enthaltend
a) ein thermoplastisches Polymer, das an ein Polymerrückgrat über eine Gruppe -O-, -O-CO-, -CO-$OR^{22}$-OCO- oder -CO-O- gebundene aliphatische oder cycloaliphatische Seitengruppen enthält, die in $\alpha$-, $\beta$-, $\gamma$- oder $\omega$-Stellung mindestens ein Cl-, Br- oder I-Atom enthalten, wobei $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_4$-$C_{12}$-Cycloalkylen$-(CH_2)_2$, Benzylen oder Xylylen darstellt, und
b) eine Verbindung der Formel I und/oder der Formel Ia

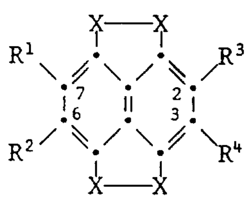 (I), 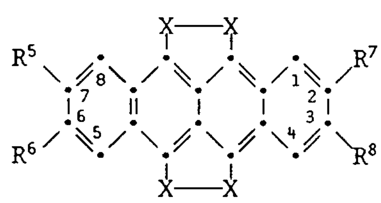 (Ia),

worin X für S, Se oder Te steht, $R^1$, $R^2$, $R^3$ und $R^4$ unabhängig voneinander ein Wasserstoffatom oder Cl bedeuten oder $R^1$ und $R^2$ sowie $R^3$ und $R^4$ zusammen je

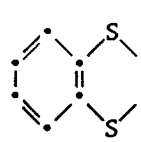 oder 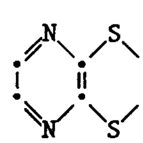 oder

$R^1$, $R^2$, $R^3$ und $R^4$ je Phenylthio, 4-Methyl- oder 4-Methoxyphenylthio oder 4-Pyridylthio darstellen, $R^5$, $R^6$, $R^7$ und $R^8$ unabhängig voneinander H oder F bedeuten, $R^5$ für $CH_3$ und $R^6$, $R^7$ und $R^8$ für H oder $R^5$, $R^6$, $R^7$ und $R^8$ für $CH_3$ stehen, $R^5$ und $R^6$ für $CH_3$ oder Cl und $R^7$ und $R^8$ für H stehen oder $R^5$ und $R^6$ für H, $R^7$ für $-COR^9$ und $R^8$ für H oder $-COR^9$, oder $R^5$ und $R^6$ für H und $R^7$ und $R^8$ zusammen für -CO-O-CO- oder $-CO-NR^{10}-CO-$ stehen, worin $R^9$ Halogen, -OH, $-NH_2$, oder den Rest eines Alkohols, primären oder sekundären Amins darstellt, oder -OM ist, wobei M ein Kation bedeutet, und $R^{10}$ H oder der um die $NH_2$-Gruppe verminderte Rest eines primären Amins ist, und
c) gegebenenfalls ein inertes organisches Lösungsmittel.

**24.** Zusammensetzung gemäss Anspruch 23, dadurch gekennzeichnet, dass sie zusätzlich ein von Komponente a) verschiedenes thermoplastisches Polymer enthält.

**25.** Zusammensetzung gemäss Anspruch 23, dadurch gekennzeichnet, dass die Komponente a) mindestens in einer solchen Menge enthalten ist, dass sie zur Bildung von CT-Komplexen aus den Verbindungen der Komponente b) genügt.

**26.** Zusammensetzung gemäss Anspruch 23, dadurch gekennzeichnet, dass die Komponente b) in einer Menge von 0,01 bis 20 Gew.-% enthalten ist, bezogen auf das Polymer der Komponente a).

**27.** Elektrisch leitende oder antistatisch ausgerüstete Zusammensetzung, erhältlich durch Erwärmen und gegebenenfalls Verdampfen des Lösungsmittels einer Zusammensetzung gemäss Anspruch 23.

**28.** Geformte Gegenstände, Filme, Beschichtungen und Verbundstoffe aus einer Zusammensetzung gemäss den Ansprüchen 1 oder 27.

**29.** Homo- oder Copolymer aus Acrylsäure- oder Methacrylsäureestern, das in $\alpha$-, $\beta$-, $\gamma$- oder $\omega$-Stellung chlorierte, bromierte und/oder iodierte aliphatische oder cycloaliphatische Gruppen in der Estergruppe enthält.

**30.** Homo- oder Copolymer gemäss Anspruch 29, dadurch gekennzeichnet, dass die Estergruppe an das O-Atom der Carboxylgruppe gebundene Gruppen

$$-(R^{22}-O-CO)_z C_m H_n X^2_o$$

enthält, worin z 0 oder 1 bedeutet, m für eine Zahl von 1 bis 12, n für 0 oder eine Zahl von 1 bis 24 und o für eine Zahl von 1 bis 25 stehen und die Summe von $n + o = 2m + 1$ ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt.

**31.** Homo- oder Copolymer gemäss Anspruch 29, dadurch gekennzeichnet, dass es
a) 0,1 bis 100 Mol-% mindestens eines Strukturelements der Formel III

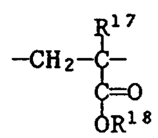

(III),

und
b) 0 bis 99,9 Mol-% mindestens eines Strukturelements der Formel IV

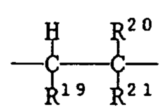

(IV)

enthält, bezogen auf das Polymer, worin $R^{17}$ für H oder Methyl steht; $R^{18}$ einen Rest

$$-(R^{22}-O-CO)_z-C_mH_nX^2_o$$

darstellt, worin z 0 oder 1 bedeutet, m für eine Zahl von 1 bis 12, n für 0 oder eine Zahl von 1 bis 24 und o für eine Zahl von 1 bis 25 stehen und die Summe von n + o = 2 m + 1 ist, $X^2$ für Cl, Br oder I steht, und $R^{22}$ unsubstituiertes oder mit OH, Cl, Br oder Phenyl substituiertes $C_2$-$C_{12}$-Alkylen, $C_4$-$C_{12}$-Cycloalkylen, $C_4$-$C_{12}$-Cycloalkylen-$CH_2$-, $C_2$-$C_{12}$-Cycloalkylen$-(CH_2)_2$, Benzylen oder Xylylen darstellt; $R^{19}$ H, $C_1$-$C_6$-Alkyl oder -$COOR^{23}$ bedeutet; $R^{20}$ für H, F, Cl, CN, oder $C_1$-$C_6$-Alkyl steht; und $R^{21}$ H, F, Cl, CN, $R^{23}$-O-, $C_1$-$C_{12}$-Alkyl, -$COOR^{23}$, -O-CO-$R^{23}$, -$COOR^{22}$-OH,

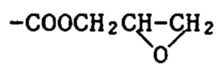

oder Phenyl darstellt, $R^{22}$ die zuvor angegebene Bedeutung hat und $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt.

**32.** Homo- oder Copolymer gemäss Anspruch 29, dadurch gekennzeichnet, dass $R^{17}$ für Methyl steht; $R^{18}$ einen Rest -$R^{22}$-O-CO-$C_mH_nX^2_o$ darstellt, worin m für eine Zahl von 1 bis 6, n für 0 oder eine Zahl von 1 bis 12 und o für eine Zahl von 1 bis 13 stehen, und die Summe von n + o = 2 m + 1 ist, $X^2$ für Cl steht, und $R^{22}$ unsubstituiertes oder mit OH oder Cl substituiertes $C_2$-$C_6$-Alkylen, Cyclopentylen, Cyclohexylen, Cyclopentylen-$CH_2$-, Cyclohexylen-$CH_2$- oder Cyclohexylen$-(CH_2)_2$ darstellt; $R^{19}$ H bedeutet; $R^{20}$ H, F, Cl oder $C_1$-$C_4$-Alkyl ist; und $R^{21}$ H,F, Cl, CN, $R^{23}$-O-, $C_1$-$C_6$-Alkyl, -$COOR^{23}$, -O-CO-$R^{23}$, -$COOR^{22}$-OH,

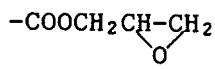

oder Phenyl darstellt, $R^{22}$ die zuvor angegebene Bedeutung hat und $R^{23}$ $C_1$-$C_6$-Alkyl, $C_5$-oder $C_6$-Cycloalkyl, Phenyl oder Benzyl ist.

**33.** Homo- und Copolymer gemäss Anspruch 30, dadurch gekennzeichnet, dass $R^{18}$ einem Rest -$R^{22}$-O-CO-$C_mH_nX^2_o$ entspricht, worin $R^{22}$ lineares oder verzweigtes $C_2$-$C_6$-Alkylen bedeutet, $X^2$ für Cl steht und m eine Zahl von 1 bis 4, n 0 oder eine Zahl von 1 bis 8 und o eine Zahl von 1 bis 9 darstellen, und die Summe von n + o = 2 m + 1 ist.

**34.** Homo- oder Copolymer gemäss Anspruch 33, dadurch gekennzeichnet, dass die Gruppe -$C_mH_nX^2_o$ für -$CH_2Cl$, -$CHCl_2$, -$CCl_3$, -$CHClCH_3$, -$CCl_2CH_3$, -$CHCl$-$CH_2Cl$, -$CCl_2$-$CH_2Cl$, -$CHCl$-$CHCl_2$, -$CCl_2$-$CHCl_2$, -$CCl_2$-$CCl_3$, -$CH_2$-$CH_2Cl$, -$CH_2$-$CHCl_2$ oder -$CH_2$-$CCl_3$ steht.

**35.** Homo- oder Copolymer, dadurch gekennzeichnet, dass es sich bei dem thermoplastischen Polymer um ein lineares Polyaddukt aus einer Glycidylverbindung mit durchschnittlich mehr als einer Epoxidgruppe und einem Diol, primären Monoamin, disekundären Diamin, disekundären linearen oder cyclischen Dicarbonsäurediamid oder einer Dicarbonsäure handelt, in dem das H-Atom der sekundären OH-Gruppen mindestens teilweise durch eine Gruppe -CO-$C_mH_nX^2_o$ substituiert ist, worin m für eine Zahl von 1 bis 12, n für 0 oder eine Zahl von 1 bis 24 und o eine Zahl von 1 bis 25 sind, und die Summe von n + o = 2 m + 1 ist, und $X^2$ für Cl, Br oder I steht.

**36.** Homo- oder Copolymer gemäss Anspruch 35, dadurch gekennzeichnet, dass das Polyaddukt

a) 100 bis 0,1 Mol-% gleiche oder verschiedene Struktureinheiten der Formel V

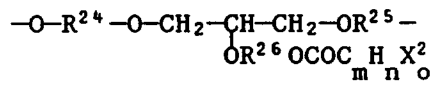 (V)

und

b) 99,9 bis 0 Mol-% gleiche oder verschiedene Struktureinheiten der Formel VI

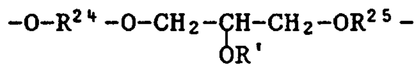 (VI)

enthält, bezogen auf das Polyaddukt, wobei $R^{24}$ und $R^{25}$ unabhängig voneinander den um zwei Hydroxylgruppen verminderten Rest eines Diols mit aliphatischen oder aromatischen Diolgruppen darstellen, R' H, unsubstituiertes oder mit OH substituiertes $C_1$-$C_{20}$-Alkyl, $C_1$-$C_{20}$-Acyl oder mit einem $C_1$-$C_{20}$-Kohlenwasserstoffrest N-substituiertes Aminocarbonyl bedeutet, $-OR^{26}$- eine direkte Bindung oder $R^{26}$ unsubstituiertes oder mit $C_1$-$C_{16}$-Alkyl substituiertes Ethylen darstellen, und $X^2$, m, n und o die im Anspruch 31 angegebenen Bedeutungen haben.

**37.** Homo- oder Copolymer gemäss Anspruch 36, dadurch gekennzeichnet, dass $R^{24}$ und $R^{25}$ unabhängig voneinander einen Rest der Formel

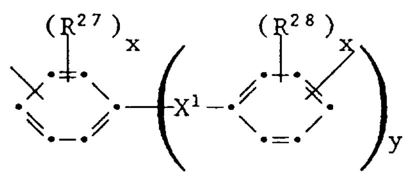

darstellen, worin $X^1$ eine direkte Bindung, $C_1$-$C_4$-Alkylen, $C_2$-$C_{12}$-Alkyliden, $C_5$-$C_8$-Cycloalkyliden, -O-, -S-, -SO-, $-SO_2$-, -CO-, $-CO_2$-, -N($C_1$-$C_4$-Alkyl)- oder $-Si(CH_3)_2$- bedeutet, $R^{27}$ und $R^{28}$ unabhängig voneinander H, Halogen, $C_1$-$C_4$-Alkyl oder $C_1$-$C_4$-Alkoxy sind, und x 0, 1 oder 2 bedeutet und y für 0 oder 1 steht.

**38.** Homo- oder Copolymer gemäss Anspruch 37, dadurch gekennzeichnet, dass $R^{24}$ und $R^{25}$ den Rest

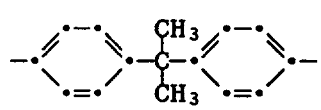

bedeuten.

**39.** Homo- oder Copolymer gemäss Anspruch 36, dadurch gekennzeichnet, dass $-R^{26}O$- eine direkte Bindung darstellt, $X^2$ für Cl steht und m eine Zahl von 1 bis 4, n 0 oder eine Zahl von 1 bis 8 und o eine Zahl von 1 bis 9 darstellen, und die Summe von $n + o = 2m + 1$ ist.

**40.** Homo- oder Copolymer gemäss Anspruch 35, dadurch gekennzeichnet, dass die Gruppe $-C_mH_nX_o^2$ für $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ oder $-CH_2-CCl_3$ steht.

**41.** Homo- oder Copolymer, dadurch gekennzeichnet, dass es sich um ein Homo- oder Copolymer des Vinylalkohols handelt, in dem das H-Atom der sekundären OH-Gruppe mindestens teilweise mit einer Gruppe $-Y^1-C_mH_nX_o^2$ substituiert ist, worin $Y^1$ -CO- oder $-R^{26}-O-CO-$ bedeutet, $X^2$ für Cl, Br oder I steht,

m eine Zahl von 1 bis 12, n für 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt.

**42.** Homo- oder Copolymer gemäss Anspruch 41, dadurch gekennzeichnet, dass das Copolymer

a) 90 bis 0,1 Mol% Struktureinheiten der Formel VII

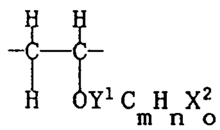

(VII),

und

b) 99,9 bis 10 Mol% gleiche oder verschiedene Struktureinheiten der Formel VIII

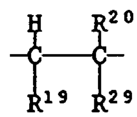

(VIII),

enthält, worin $Y^1$ -CO- oder -$R^{26}$-O-CO- bedeutet, $X^2$ für Cl, Br oder I steht, m eine Zahl von 1 bis 12, n 0 oder eine Zahl von 1 bis 24, o eine Zahl von 1 bis 25 sind und die Summe von n + o = 2 m + 1 ist, und $R^{26}$ unsubstituiertes oder mit $C_1$-$C_{16}$-Alkyl substituiertes Ethylen darstellt; $R^{19}$ H, $C_1$-$C_6$-Alkyl oder -$COOR^{23}$ bedeutet; $R^{20}$ für H, F, Cl, CN oder $C_1$-$C_6$-Alkyl steht; und $R^{29}$ H, F, Cl, CN, OH, $R^{23}O$-, $C_1$-$C_{12}$-Alkyl, -$COOR^{23}$, -O-CO-$R^{23}$, -$OR^{22}OH$ oder Phenyl darstellt; $R^{23}$ $C_1$-$C_{18}$-Alkyl, $C_5$-$C_7$-Cycloalkyl, ($C_1$-$C_{12}$-Alkyl)-$C_5$-$C_7$-cycloalkyl, Phenyl, ($C_1$-$C_{12}$-Alkyl)phenyl, Benzyl oder ($C_1$-$C_{12}$-Alkyl)benzyl darstellt und $R^{22}$ unsubstituiertes oder mit $C_1$-$C_{16}$-Alkyl substituiertes Ethylen ist.

**43.** Homo- oder Copolymer gemäss Anspruch 42, dadurch gekennzeichnet, dass $Y^1$ -CO-, -$CH_2CH_2O$-CO- oder -$CH_2CH(CH_3)O$-CO- ist, $X^2$ Cl bedeutet, m eine Zahl von 1 bis 6, n 0 oder eine Zahl von 1 bis 12 und o eine Zahl von 1 bis 13 sind und die Summe von n + o = 2 m + 1 ist; $R^{19}$ und $R^{20}$ H bedeuten; und $R^{29}$ H, F, Cl, CN, OH, $R^{23}O$-, $C_1$-$C_4$-Alkyl, -$COOR^{23}$, -O-CO-$R^{23}$, Phenyl, -$OCH_2CH_2OH$ oder -$OCH_2CH(CH_3)OH$ darstellt; und $R^{23}$ $C_1$-$C_6$-Alkyl, $C_5$- oder $C_6$-Cycloalkyl, Phenyl oder Benzyl ist.

**44.** Homo- oder Copolymer gemäss Anspruch 42, dadurch gekennzeichnet, dass $X^2$ für Cl steht und m eine Zahl von 1 bis 4, n 0 oder eine Zahl von 1 bis 8 und o eine Zahl von 1 bis 9 darstellen, und die Summe von n + o = 2 m + 1 ist.

**45.** Homo- oder Copolymer gemäss Anspruch 42, dadurch gekennzeichnet, dass die Gruppe -$C_mH_nX^2_o$ für -$CH_2Cl$, -$CHCl_2$, -$CCl_3$, -$CHClCH_3$, -$CCl_2CH_3$, -$CHCl$-$CH_2Cl$, -$CCl_2$-$CH_2Cl$, -$CHCl$-$CHCl_2$, -$CCl_2$-$CHCl_2$, -$CCl_2$-$CCl_3$, -$CH_2$-$CH_2Cl$, -$CH_2$-$CHCl_2$ oder -$CH_2$-$CCl_3$ steht.

## Claims

**1.** A composition comprising

a) a thermoplastic polymer soluble in an inert organic solvent, which contains aliphatic or cycloaliphatic side groups bonded to a polymer backbone via a grornp -O-, -O-CO-, -CO-$OR^{22}$-OCO- or -CO-O-, said side groups containing at least one Cl, Br or I atom in the $\alpha$-, $\beta$-, $\gamma$- or $\omega$-position, $R^{22}$ being $C_2$-$C_{12}$alkylene, $C_4$-$C_{12}$cycloalkylene, $C_4$-$C_{12}$cycloalkylene-$CH_2$-,$C_4$-$C_{12}$cycloalkylene-$(CH_2)_2$-, benzylene or xylylene which is unsubstituted or substituted by OH, Cl, Br or phenyl, and

b) a charge transfer complex (CT complex) formed of chlorine, bromine or iodine and a compound of formula I or Ia

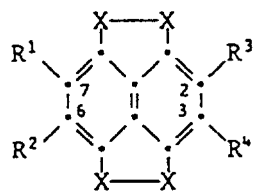 (I), 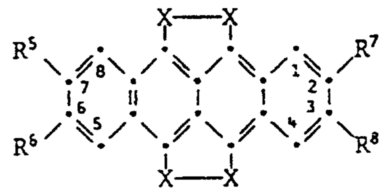 (Ia),

or mixtures thereof, in which X is S, Se or Te, $R^1$, $R^2$, $R^3$ and $R^4$ are each independently of one another a hydrogen atom or Cl, or $R^1$ and $R^2$, and $R^3$ and $R^4$, together are each

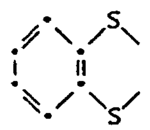 or 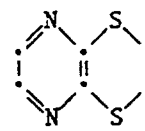 or

$R^1$, $R^2$, $R^3$ and $R^4$ are each phenylthio, 4-methylphenylthio, 4-methoxryhenylthio or pyrid-4-ylthio, and $R^5$, $R^6$, $R^7$ and $R^8$ are each independently of one another H or F, or $R^5$ is $CH_3$ and $R^6$, $R^7$ and $R^8$ are H, or $R^5$, $R^6$, $R^7$ and $R^8$ are $CH_3$, or $R^5$ and $R^6$ are $CH_3$ or Cl and $R^7$ and $R^8$ are H, or $R^5$ and $R^6$ are H, $R^7$ is $-COR^9$ and $R^8$ is H or $-COR^9$, or $R^5$ and $R^6$ are H and $R^7$ and $R^8$ together are -CO-O-CO- or $-CO-NR^{10}-CO-$, in which $R^9$ is halogen, -OH, $-NH_2$, or the radical of an alcohol or of a primary or secondary amine, or -OM, M being a cation, and $R^{10}$ is H or the radical of a primary amine from which the $NH_2$ group has been removed.

**2.** A composition according to claim 1, wherein component b) is present in an amount of 0.01 to 20 % by weight, based on polymer a).

**3.** A composition according to claim 1, wherein the CT complex is formed from a compound of formula Ia and is tetrathiotetracene, tetraselenotetracene or 2-fluoro- or 2,3-difluoro-tetraselenotetracene.

**4.** A composition according to claim 1, wherein the CT complex is formed from chlorine and a compound of formula Ia.

**5.** A composition according to claim 1, wherein the CT complex is $(tetraselenotetracene)_2Cl$.

**6.** A composition according to claim 1, wherein the CT complex is in the form of a needle network of crystal needles.

**7.** A composition according to claim 1 which comprises up to 95 % by weight, based on polymer a), of at least one thermoplastic or elastomeric polymer differing from component a).

**8.** A composition according to claim 7, wherein the thermoplastic polymers are polymers of monoolefins and diolefins; copolymers of monoolefins and/or diolefins; polystyrene, poly(p-methylstyrene) or poly($\alpha$-methylstyrene); copolymers of styrene or $\alpha$-methylstyrene; graft copolymers of styrene or $\alpha$-methylstyrene; halogen-containing polymers; polymers and copolymers of derivatives of $\alpha,\beta$-unsaturated acids; polymers derived from acyl derivatives or acetates of unsaturated alcohols; homopolymers and copolymers of cyclic ethers; polyacetals; polyphenylene oxides and sulfides and mixtures thereof with styrene polymers; polyurethanes; polyureas; polyimides; polybenzimidazoles; polycarbonates; polyesters; polyester-carbonates; polysulfones; polyether-sulfones; polyether-ketones; polyvinylcarbazole; polyadducts of unsubstituted or hydroxylalkylated epoxy compounds containing on average more than one epoxy group per molecule, and diols, primary monoamines, disecondary diamines, disecondary linear or cyclic dicarboxylic acid diamides or dicarboxylic acids; cellulose derivatives; sulfur-crosslinked products derived from polymers containing double bonds; and mixtures of the aforementioned polymers.

**9.** A composition according to claim 1, wherein the thermoplastic polymer of component a) is a homopolymer or copolymer of an acrylic acid or methacrylic acid ester containing chlorinated,

brominated and/or iodinated aliphatic or cycloaliphatic groups in the ester group.

**10.** A composition according to claim 9, wherein the polymer contains
a) 0.1 to 100 mol% of at least one structural unit of formula III

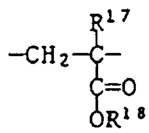

(III),

and
b) 0 to 99.9 mol% of at least one structural unit of formula IV

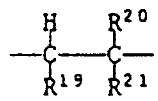

(IV)

based on the polymer, in which $R^{17}$ is H or methyl; $R^{18}$ is a radical $-(R^{22}-O-CO)_z-C_mH_nX^2_o$ , in which z is 0 or 1, m is a number from 1 to 12, n is 0 or a number from 1 to 24, o is a number from 1 to 25 and $n + o = 2m + 1$, $X^2$ is Cl, Br or I and $R^{22}$ is $C_2$-$C_{12}$alkylene, $C_4$-$C_{12}$cycloalkylene, $C_4$-$C_{12}$cycloalkylene-$CH_2$-, $C_2$-$C_{12}$cycloalkylene-$(CH_2)_2$-, benzylene or xylylene which is unsubstituted or substituted by OH, Cl, Br or phenyl; $R^{19}$ is H, $C_1$-$C_6$alkyl or $-COOR^{23}$; $R^{20}$ is H, F, Cl, CN or $C_1$-$C_6$alkyl; and $R^{21}$ is H, F, Cl, CN, $R^{23}$-O-, $C_1$-$C_{12}$alkyl, $-COOR^{23}$, $-O-CO-R^{23}$, $-COOR^{22}-OH$,

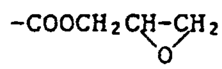

or phenyl, in which $R^{22}$ is as defined above and $R^{23}$ is $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)phenyl, benzyl or ($C_1$-$C_{12}$alkyl)benzyl.

**11.** A composition according to claim 10, wherein $R^{17}$ is methyl; $R^{18}$ is a radical $-R^{22}-O-CO-C_mH_nX^2_o$ , in which m is a number from 1 to 6, n is 0 or a number from 1 to 12, o is a number from 1 to 13 and $n + o = 2m + 1$, $X^2$ is Cl and $R^{22}$ is $C_2$-$C_6$alkylene, cyclopentylene, cylohexylene, cyclopentylene-$CH_2$-, cyclohexylene-$CH_2$- or cyclohexylene-$(CH_2)_2$- which is unsubstituted or substituted by OH or Cl; $R^{19}$ is H; $R^{20}$ is H, F, Cl or $C_1$-$C_4$alkyl; and $R^{21}$ is H, F, Cl, CN, $R^{23}$-O-, $C_1$-$C_6$alkyl, $-COOR^{23}$, $-O-CO-R^{23}$, $-COOR^{22}-OH$,

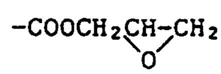

or phenyl, $R^{22}$ being as defined above and $R^{23}$ being $C_1$-$C_6$alky1, $C_5$ or $C_6$cycloalkyl, phenyl or benzyl.

**12.** A composition according to claim 10, wherein $R^{17}$ is methyl; $R^{18}$ is a radical $-R^{22}-O-CO-C_mH_nX^2_o$ , in which m is a number from 1 to 4, n is 0 or a number from 1 to 8, o is a number from 1 to 13 and $n + o = 2m + 1$, $X^2$ is Cl and $R^{22}$ is linear $C_2$-$C_6$alkylene or $-CH_2CHOHCH_2-$; $R^{19}$ and $R^{20}$ are H; and $R^{21}$ is $-COOR^{22}OH$ or $-COOR^{23}$, in which $R^{22}$ is as defined above and $R^{23}$ is $C_1$-$C_6$alkyl.

**13.** A composition according to claim 1, wherein the thermoplastic polymer of component a) is a linear polyadduct of a glycidyl compound containing on average more than one epoxy group, and a diol, a primary monoamine, a disecondary diamine, a disecondary linear or cyclic dicarboxylic acid diamide or a dicarboxylic acid, in which polyadduct the H atom of the secondary OH groups is at least partially substituted by a group $-CO-C_mH_nX^2_o$ , in which m is a number from 1 to 12, n is 0 or a number from 1 to 24, o is a number from 1 to 25 and $n + o = 2m + 1$, and $X^2$ is Cl, Br or I.

**14.** A composition according to claim 13, wherein the polyadduct contains
a) 100 to 0.1 mo1% of identical or different structural units of formula V

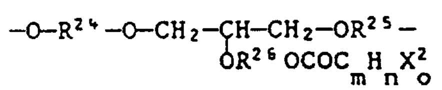 (V)

and
b) 99.9 to 0 mol% of identical or different structural units of formula VI

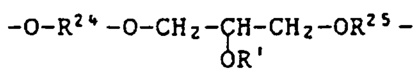 (VI)

based on the polyadduct, where $R^{24}$ and $R^{25}$ are each independently of the other the radical of a diol containing aliphatic or aromatic diol groups, from which two hydroxyl groups have been removed, R' is H, unsubstituted or OH-substituted $C_1$-$C_{20}$alkyl $C_1$-$C_{20}$acyl or aminocarbonyl which is N-substituted by a $C_1$-$C_{20}$hydrocarbon radical, -$OR^{26}$- is a direct bond or $R^{26}$ is ethylene which is unsubstituted or substituted by $C_1$-$C_{16}$alkyl, and $X^2$, m, n and o are as defined in claim 12.

**15.** A composition according to claim 14, wherein $R^{24}$ and $R^{25}$ are each independently of the other a radical of the formula

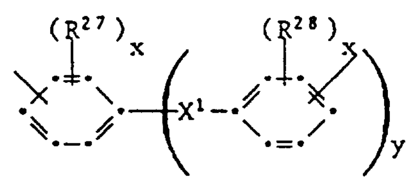

in which $X^1$ is a direct bond, $C_1$-$C_4$alkylene, $C_2$-$C_{12}$alkylidene, $C_5$-$C_6$cycloalkylidene, -O-, -S-, -SO-, -$SO_2$-, -CO-, -$CO_2$-, -N($C_1$-$C_4$alkyl)-or -Si$(CH_3)_2$-, $R^{27}$ and $R^{28}$ are each independently of the other H, halogen, $C_1$-$C_4$alkyl or $C_1$-$C_4$alkoxy, x is 0, 1 or 2 and y is 0 or 1.

**16.** A composition according to claim 15, wherein $R^{24}$ and $R^{25}$ are the radical

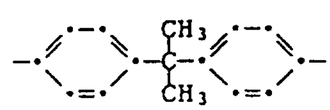 .

**17.** A composition according to claim 1, wherein the thermoplastic polymer of component a) is a homopolymer or copolymer of vinyl alcohol in which the H atom of the secondary OH group is at least partially substituted by a group $-Y-C_mH_nX^2_o$ , in which Y is a direct bond, -CO- or -$R^{26}$-O-CO-, $X^2$ is Cl, Br or I, m is a number from 1 to 12, n is 0 or a number from 1 to 24, o is a number from 1 to 25 and n + o = 2m + 1, $R^{26}$ being ethylene which is unsubstituted or substituted by $C_1$-$C_{16}$alkyl.

**18.** A composition according to claim 17, wherein the copolymer contains

a) 90 to 0.1 mol% of structural units of formula VII

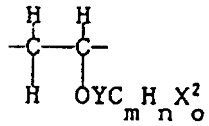 (VII),

and

b) 99.9 to 10 mol% of identical or different structural units of formula VIII

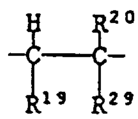 (VIII),

in which Y is a direct bond, -CO- or -$R^{26}$-O-CO-, $X^2$ is Cl, Br or I, m is a number from 1 to 12, n is 0 or a number from 1 to 24, o is a number from 1 to 25 and n + o = 2m + 1, $R^{26}$ being ethylene which is unsubstituted or substituted by $C_1$-$C_{16}$alkyl; $R^{19}$ is H, $C_1$-$C_6$alkyl or -COO$R^{23}$; $R^{20}$ is H, F, Cl, CN or $C_1$-$C_6$alkyl and $R^{29}$ is H, F, Cl, CN, OH, $R^{23}$O-, $C_1$-$C_{12}$alkyl, -COO$R^{23}$, -O-CO-$R^{23}$, -O$R^{22}$OH or phenyl, $R^{23}$ being $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)phenyl, benzyl or ($C_1$-$C_{12}$alkyl)benzyl and $R^{22}$ being ethylene which is unsubstituted or substituted by $C_1$-$C_{16}$alkyl.

**19.** A composition according to claim 18, wherein Y is a direct bond, -CO-, -$CH_2CH_2$O-CO- or -$CH_2$CH-($CH_3$)O-CO-, $X^2$ is Cl, m is a number from 1 to 6, n is 0 or a number from 1 to 12, o is a number from 1 to 13 and n + o = 2m + 1; $R^{19}$ and $R^{20}$ are H; and $R^{29}$ is H, F, Cl, CN, OH, $R^{23}$O-, $C_1$-$C_4$alkyl, -COO$R^{23}$, -O-CO-$R^{23}$, phenyl, -$OCH_2CH_2OH$ or -$OCH_2CH(CH_3)OH$; and $R^{23}$ is $C_1$-$C_6$alkyl, $C_5$ or $C_6$cycloalkyl, phenyl or benzyl.

**20.** A process for the preparation of a composition according to claim 1, which comprises allowing

a) a thermoplastic polymer which contains aliphatic or cycloaliphatic side groups bonded to a polymer backbone via a group -O-, -O-CO-, -CO-O$R^{22}$-OCO- or -CO-O-, said side groups containing at least one Cl, Br or I atom in the $\alpha$-, $\beta$-, $\gamma$- or $\omega$-position, to act on a compound of formula I and/or formula Ia

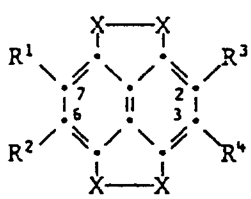 (I),

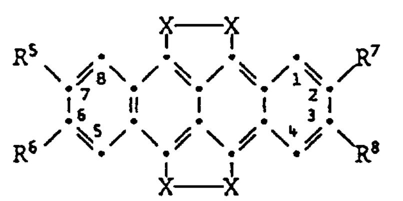 (Ia),

in which X is S, Se or Te, $R^1$, $R^2$, $R^3$ and $R^4$ are each independently of one another a hydrogen atom or Cl, or $R^1$ and $R^2$, and $R^3$ and $R^4$, together are each

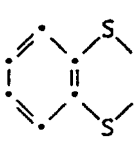 or 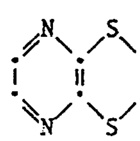 or

$R^1$, $R^2$, $R^3$ and $R^4$ are each phenylthio, 4-methylphenylthio, 4-methoxyphenylthio or pyrid-4-ylthio, and $R^5$, $R^6$, $R^7$ and $R^8$ are each independently of one another H or F, or $R^5$ is $CH_3$ and $R^6$, $R^7$ and

$R^8$ are H, or $R^5$, $R^6$, $R^7$ and $R^8$ are $CH_3$, or $R^5$ and $R^6$ are $CH_3$ or Cl and $R^7$ and $R^8$ are H, or $R^5$ and $R^6$ are H, $R^7$ is $-COR^9$ and $R^8$ is H or $-COR^9$, or $R^5$ and $R^6$ are H and $R^7$ and $R^8$ together are -CO-O-CO- or $-CO-NR^{10}-CO-$, in which $R^9$ is halogen, -OH, $-NH_2$, or the radical of an alcohol or of a primary or secondary amine, or -OM, M being a cation, and $R^{10}$ is H or the radical of a primary amine from which the $NH_2$ group has been removed.

**21.** A process according to claim 20 which is carried out at a temperature from 25 to 350 °C.

**22.** A process according to claim 20 which is carried out in the presence of an inert organic solvent which evaporates at a temperature from 25 to 350 °C.

**23.** A composition comprising
a) a thermoplastic polymer which contains aliphatic or cycloaliphatic side groups bonded to a polymer backbone via a group -O-, -O-CO-, $-CO-OR^{22}-OCO-$ or -CO-O-, said side groups containing at least one Cl, Br or I atom in the $\alpha$-, $\beta$-, $\gamma$- or $\omega$-position, $R^{22}$ being $C_2$-$C_{12}$alkylene,$C_4$-$C_{12}$cycloalkylene, $C_4$-$C_{12}$cycloalkylene-$CH_2$-, $C_4$-$C_{12}$cycloalkylene-$(CH_2)_2$-, benzylene or xylylene which is unsubstituted or substituted by OH, Cl, Br or phenyl, and
b) a compound of formula I and/or formula Ia

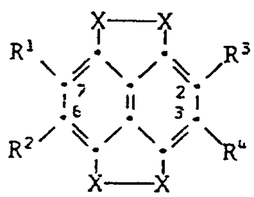 (I), 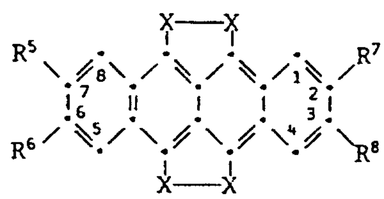 (Ia),

in which X is S, Se or Te, $R^1$, $R^2$, $R^3$ and $R^4$ are each independently of one another a hydrogen atom or Cl, or $R^1$ and $R^2$, and $R^3$ and $R^4$, together are each

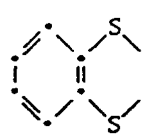 or 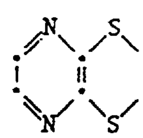 or

$R^1$, $R^2$, $R^3$ and $R^4$ are each phenylthio, 4-methylphenylthio, 4-methoxyphenylthio or pyrid-4-ylthio, and $R^5$, $R^6$, $R^7$ and $R^8$ are each independently of one another H or F, or $R^5$ is $CH_3$ and $R^6$, $R^7$ and $R^8$ are H, or $R^5$, $R^6$, $R^7$ and $R^8$ are $CH_3$, or $R^5$ and $R^6$ are $CH_3$ or Cl and $R^7$ and $R^8$ are H, or $R^5$ and $R^6$ are H, $R^7$ is $-COR^9$ and $R^8$ is H or $-COR^9$, or $R^5$ and $R^6$ are H and $R^7$ and $R^8$ together are -CO-O-CO- or $-CO-NR^{10}-CO-$, in which $R^9$ is halogen, -OH, $-NH_2$, or the radical of an alcohol or of a primary or secondary amine, or -OM, M being a cation, and $R^{10}$ is H or the radical of a primary amine from which the $NH_2$ group has been removed, and
c) if desired, an inert organic solvent.

**24.** A composition according to claim 23 which additionally contains a thermoplastic polymer differing from component a).

**25.** A composition according to claim 23, wherein component a) is present in a sufficient amount to form CT complexes of the compounds of component b).

**26.** A composition according to claim 23, wherein component b) is present in an amount of 0.01 to 20 % by weight, based on the polymer of component a).

**27.** An electrically conducting or antistatic composition obtainable by heating a composition according to claim 23 and, if appropriate, evaporating off the solvent.

**28.** A shaped article, film, coating or composite produced from a composition according to claim 1 or claim 27.

**29.** A homopolymer or copolymer of acrylic acid or methacrylic acid esters which contains aliphatic or cycloaliphatic groups in the ester group, said aliphatic or cycloaliphatic groups being chlorinated, brominated and/or iodinated in the α-, β-, γ- or ω-position.

**30.** A homopolymer or copolymer according to claim 29, wherein the ester group contains groups $-(R^{22}-O-CO)_z-C_mH_nX^2_o$ bonded to the 0 atom of the carboxyl group, in which z is 0 or 1, m is a number from 1 to 12, n is 0 or a number from 1 to 24, o is a number from 1 to 25 and n + o = 2m + 1, $X^2$ is Cl, Br or I and $R^{22}$ is $C_2$-$C_{12}$alkylene, $C_4$-$C_{12}$cycloalkylene, $C_4$-$C_{12}$cycloalkylene-$CH_2$-, $C_2$-$C_{12}$cycloalkylene-$(CH_2)_2$-, benzylene or xylylene which is unsubstituted or substituted by OH, Cl, Br or phenyl.

**31.** A homopolymer or copolymer according to claim 29 which contains

a) 0.1 to 100 mol% of at least one structural unit of formula III

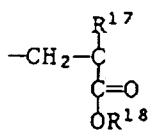

(III),

and

b) 0 to 99.9 mol% of at least one structural unit of formula IV

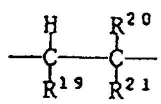

(IV)

based on the polymer, in which $R^{17}$ is H or methyl; $R^{18}$ is a radical $-(R^{22}-O-CO)_z-C_mH_nX^2_o$ , in which z is 0 or 1, m is a number from 1 to 12, n is 0 or a number from 1 to 24, o is a number from 1 to 25 and n + o = 2m + 1, $X^2$ is Cl, Br or I and $R^{22}$ is $C_2$-$C_{12}$alkylene, $C_4$-$C_{12}$cycloalkylene, $C_4$-$C_{12}$cycloalkylene-$CH_2$-, $C_2$-$C_{12}$cycloalkylene-$(CH_2)_2$-, benzylene or xylylene which is unsubstituted or substituted by OH, Cl, Br or phenyl; $R^{19}$ is H, $C_1$-$C_6$alkyl or $-COOR^{23}$; $R^{20}$ is H, F, Cl, CN or $C_1$-$C_6$alkyl; and $R^{21}$ is H, F, Cl, CN, $R^{23}$-O-, $C_1$-$C_{12}$alkyl, $-COOR^{23}$, $-O-CO-R^{23}$, $-COOR^{22}-OH$,

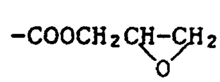

or phenyl, $R^{22}$ being as defined above and $R^{23}$ being $C_1$-$C_{18}$alkyl, $C_5$-$C_7$cycloalkyl, ($C_1$-$C_{12}$alkyl)-$C_5$-$C_7$cycloalkyl, phenyl, ($C_1$-$C_{12}$alkyl)phenyl, benzyl or ($C_1$-$C_{12}$alkyl)benzyl.

**32.** A homopolymer or copolymer according to claim 29, wherein $R^{17}$ is methyl; $R^{18}$ is a radical $-R^{22}-O-CO-C_mH_nX^2_o$ , in which m is a number from 1 to 6, n is 0 or a number from 1 to 12, o is a number from 1 to 13 and n + o = 2m + 1, $X^2$ is Cl and $R^{22}$ is $C_2$-$C_6$alkylene, cyclopentylene, cylohexylene, cyclopentylene-$CH_2$-, cyclohexylene-$CH_2$- or cyclohexylene-$(CH_2)_2$- which is unsubstituted or substituted by OH or Cl; $R^{19}$ is H; $R^{20}$ is H, F, Cl or $C_1$-$C_4$alkyl; and $R^{21}$ is H, F, Cl, CN, $R^{23}$-O-, $C_1$-$C_6$alkyl, $-COOR^{23}$, $-O-CO-R^{23}$, $-COOR^{22}-OH$,

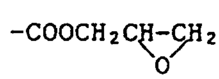

or phenyl, $R^{22}$ being as defined above and $R^{23}$ being $C_1$-$C_6$alkyl, $C_5$- or $C_6$cycloalkyl, phenyl or benzyl.

**33.** A homopolymer or copolymer according to claim 30, wherein $R^{18}$ is a radical $-R^{22}-O-CO-C_mH_nX^2_o$ , in which $R^{22}$ is linear or branched $C_2$-$C_6$alkylene, $X^2$ is Cl, m is a number from 1 to 4, n is 0 or a number from 1 to 8, o is a number from 1 to 9 and n + o = 2m + 1.

**34.** A homopolymer or copolymer according to claim 33, wherein the group $-C_mH_nX^2_o$ is $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ or $-CH_2-CCl_3$.

**35.** A homopolymer or copolymer wherein the thermoplastic polymer is a linear polyadduct of a glycidyl compound containing on average more than one epoxy group, and a diol, a primary monoamine, a disecondary diamine, a disecondary linear or cyclic dicarboxylic acid diamide or a dicarboxylic acid, in which polyadduct the H atom of the secondary OH groups is at least partially substituted by a group $-CO-C_mH_nX^2_o$ , in which m is a number from 1 to 12, n is 0 or a number from 1 to 24, o is a number from 1 to 25 and n + o = 2m + 1, and $X^2$ is Cl, Br or I.

**36.** A homopolymer or copolymer according to claim 35, wherein the polyadduct contains
a) 100 to 0.1 mol% of identical or different structural units of formula V

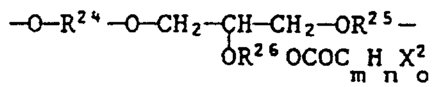

(V)

and
b) 99.9 to 0 mol% of identical or different structural units of formula VI

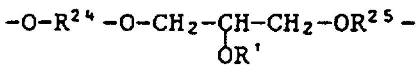

(VI)

based on the polyadduct, where $R^{24}$ and $R^{25}$ are each independently of the other the radical of a diol containing aliphatic or aromatic diol groups, from which two hydroxyl groups have been removed, R' is H, unsubstituted or OH-substituted $C_1$-$C_{20}$alkyl, $C_1$-$C_{20}$acyl or aminocarbonyl which is N-substituted by a $C_1$-$C_{20}$hydrocarbon radical, $-OR^{26}-$ is a direct bond or $R^{26}$ is ethylene which is unsubstituted or substituted by $C_1$-$C_{16}$alkyl, and $X^2$, m, n and o are as defined in claim 31.

**37.** A homopolymer or copolymer according to claim 36, wherein $R^{24}$ and $R^{25}$ are each independently of the other a radical of the formula

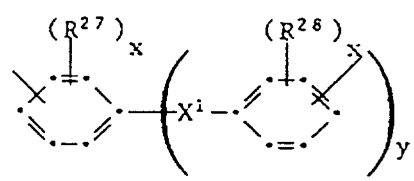

in which $X^1$ is a direct bond, $C_1$-$C_4$alkylene, $C_2$-$C_{12}$alkylidene, $C_5$-$C_8$cycloalkylidene, -O-, -S-, -SO-, $-SO_2-$, -CO-, $-CO_2-$, $-N(C_1$-$C_4alkyl)$-or $-Si(CH_3)_2-$, $R^{27}$ and $R^{28}$ are each independently of the other H, halogen, $C_1$-$C_4$alkyl or $C_1$-$C_4$alkoxy, x is 0, 1 or 2 and y is 0 or 1.

**38.** A homopolymer or copolymer according to claim 37, wherein $R^{24}$ and $R^{25}$ are the radical

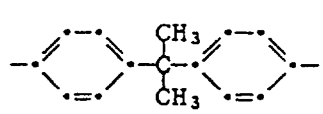

.

**39.** A homopolymer or copolymer according to claim 36, wherein $-R^{26}O-$ is a direct bond, $X^2$ is Cl, m is a number from 1 to 4, n is 0 or a number from 1 to 8, o is a number from 1 to 9 and n + o = 2m + 1.

**40.** A homopolymer or copolymer according to claim 35, wherein the group $-C_mH_nX^2_o$ is $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ or $-CH_2-CCl_3$.

**41.** A homopolymer or copolymer which is a homopolymer or copolymer of vinyl alcohol in which the H atom of the secondary OH group is at least partially substituted by a group $-Y^1-C_mH_nX^2_o$ , in which $Y^1$ is -CO- or $-R^{26}-O-CO-$, $X^2$ is Cl, Br or I, m is a number from 1 to 12, n is 0 or a number from 1 to 24, o is a number from 1 to 25 and n + o = 2m + 1, $R^{26}$ being ethylene which is unsubstituted or substituted by $C_1-C_{16}$alkyl.

**42.** A homopolymer or copolymer according to claim 41, wherein the copolymer contains

a) 90 to 0.1 mol% of structural units of formula VII

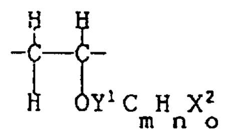

(VII),

and

b) 99.9 to 10 mol% of identical or different structural units of formula VIII

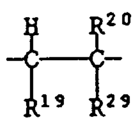

(VIII),

in which $Y^1$ is -CO- or $-R^{26}-O-CO-$, $X^2$ is Cl, Br or I, m is a number from 1 to 12, n is 0 or a number from 1 to 24, o is a number from 1 to 25 and n + o = 2m + 1, $R^{26}$ being ethylene which is unsubstituted or substituted by $C_1-C_{16}$alkyl; $R^{19}$ is H, $C_1-C_6$alkyl or $-COOR^{23}$; $R^{20}$ is H, F, Cl, CN or $C_1-C_6$alkyl; and $R^{29}$ is H, F, Cl, CN, OH, $R^{23}O-$, $C_1-C_{12}$alkyl, $-COOR^{23}$, $-O-CO-R^{23}$, $-OR^{22}OH$ or phenyl, $R^{23}$ being $C_1-C_{18}$alkyl, $C_5-C_7$cycloalkyl, $(C_1-C_{12}$alkyl$)-C_5-C_7$cycloalkyl, phenyl, $(C_1-C_{12}$alkyl)-phenyl, benzyl or $(C_1-C_{12}$alkyl)benzyl and $R^{22}$ being ethylene which is unsubstituted or substituted by $C_1-C_{16}$alkyl.

**43.** A homopolymer or copolymer according to claim 42, wherein $Y^1$ is -CO-, $-CH_2CH_2O-CO-$ or $-CH_2CH(CH_3)O-CO-$, $X^2$ is Cl, m is a number from 1 to 6, n is 0 or a number from 1 to 12, o is a number from 1 to 13 and n + o = 2m + 1; $R^{19}$ and $R^{20}$ are H; and $R^{29}$ is H, F, Cl, CN, OH, $R^{23}O-$, $C_1-C_4$alkyl, $-COOR^{23}$, $-O-CO-R^{23}$, phenyl, $-OCH_2CH_2OH$ or $-OCH_2CH(CH_3)OH$; and $R^{23}$ is $C_1-C_6$alkyl, $C_5$ or $C_6$cycloalkyl, phenyl or benzyl.

**44.** A homopolymer or copolymer according to claim 42, wherein $X^2$ is Cl, m is a number from 1 to 4, n is 0 or a number from 1 to 8, o is a number from 1 to 9 and n + o = 2m + 1.

**45.** A homopolymer or copolymer according to claim 42, wherein the group $-C_mH_nX^2_o$ is $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2-CHCl_2$, $-CCl_2-CCl_3$, $-CH_2-CH_2Cl$, $-CH_2-CHCl_2$ or $-CH_2-CCl_3$.

## Revendications

**1.** Composition contenant

a) un polymère thermoplastique soluble dans un solvant organique inerte, qui contient des groupes latéraux aliphatiques ou cycloaliphatiques liés à un polymère-tronc par l'intermédiaire d'un groupe -O-, -O-CO-, $-CO-OR^{22}-OCO-$ou -CO-O-, qui contiennent en position $\alpha$, $\beta$, $\gamma$ ou $\omega$ au moins un atome

de Cl, Br ou I, $R^{22}$ représentant un groupe alkylène en $C_2$-$C_{12}$, cycloalkylène en $C_4$-$C_{12}$, (cycloalkylène en $C_4$-$C_{12}$)-$CH_2$-, (cycloalkylène en $C_4$-$C_{12}$)$(CH_2)_2$, benzylène ou xylylène, non substitué ou substitué par OH, Cl, Br ou phényle, et

b) un complexe de transfert de charge (complexe de TC) qui est formé à partir de chlore, de brome ou d'iode et d'un composé de formule I ou Ia ou de mélanges de tels composés,

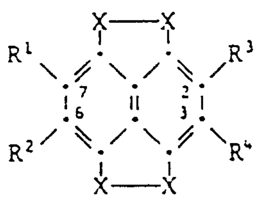 (I), 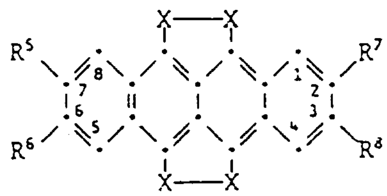 (Ia),

où X signifie S, Se ou Te, $R^1$, $R^2$, $R^3$ et $R^4$ représentent indépendamment les uns des autres un atome d'hydrogène ou de chlore, ou bien $R^1$ et $R^2$ ensemble, ainsi que $R^3$ et $R^4$ ensemble forment chacun

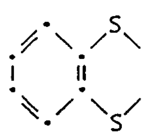 ou 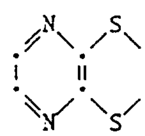 ou bien

$R^1$, $R^2$, $R^3$ et $R^4$ représentent chacun un phénylthio, un 4-méthyl- ou 4-méthoxyphénylthio ou un 4-pyridylthio, $R^5$, $R^6$, $R^7$ et $R^8$ représentent indépendamment les uns des autres H ou F, $R^5$ représente $CH_3$ et $R^6$, $R^7$ et $R^8$ sont H, ou bien $R^5$, $R^6$, $R^7$ et $R^8$ sont $CH_3$, $R^5$ et $R^6$ sont $CH_3$ ou Cl et $R^7$ et $R^8$ sont H, ou $R^5$ et $R^6$ sont H, $R^7$ est -$COR^9$ et $R^8$ est H ou -$COR^9$, ou $R^5$ et $R^6$ sont H et $R^7$ et $R^8$ forment représentent ensemble -CO-O-CO- ou -CO-$NR^{10}$-CO-, où $R^9$ représente un halogène, -OH, -$NH_2$ ou le reste d'un alcool ou d'une amine primaire ou secondaire, ou est -OM, M représentant un cation, et $R^{10}$ est H ou le reste d'une amine primaire amputé du groupe $NH_2$.

**2.** Composition selon la revendication 1, caractérisée en ce que le constituant b) est contenu en une quantité de 0,01 à 20 % en masse par rapport au polymère a).

**3.** Composition selon la revendication 1, caractérisée en ce que le complexe de TC est formé à partir d'un composé de formule Ia et représente le tétrathiotétracène, le tétrasélénotétracène, le 2-fluoro- ou 2,3-difluorotétrasélénotétracène.

**4.** Composition selon la revendication 1, caractérisée en ce que le complexe de TC est formé à partir de chlore et d'un composé de formule Ia.

**5.** Composition selon la revendication 1, caractérisée en ce que le complexe de TC est le (tétrasélénotétracène)$_2$Cl.

**6.** Composition selon la revendication 1, caractérisée en ce que le complexe de TC se présente sous forme d'un réseau d'aiguilles constitué d'aiguilles cristallines.

**7.** Composition selon la revendication 1, caractérisée en ce qu'elle contient jusqu'à 95 % en masse, par rapport au polymère a), d'au moins un polymère thermoplastique ou élastomère différent du constituant a).

**8.** Composition selon la revendication 7, caractérisée en ce qu'il s'agit pour le polymère thermoplastique de polymères de mono- et dioléfines; de copolymères de mono- et/ou dioléfines; de polystyrène, de poly(p-méthylstyrène), de poly($\alpha$-méthylstyrène); de copolymères de styrène ou d'$\alpha$-méthylstyrène; de

copolymères greffés de styrène ou d'$\alpha$-méthylstyrène; de polymères halogénés; de polymères et copolymères de dérivés d'acides $\alpha,\beta$-insaturés; de polymères qui dérivent de dérivés acylés ou d'acétates d'alcools insaturés; d'homo- et copolymères d'éthers cycliques; de polyacétals; de poly(oxydes et sulfures de phénylène) et de leurs mélanges avec des polymères de styrène; de polyuréthanes; de polyurées; de polyimides; de polybenzimidazoles; de polycarbonates; de polyesters; de polyestercarbonates; de polysulfones; de polyéthersulfones; de polyéthercétones; de polyvinylcarbazole; de produits de polyaddition de composés époxy éventuellement hydroxyalkylés ayant en moyenne plus d'un groupe époxy dans la molécule et de diols, de monoamines primaires, de diamines disecondaires, de diamides d'acides dicarboxyliques disecondaires linéaires ou cycliques ou d'acides dicarboxyliques; de dérivés de cellulose; de produits réticulés avec du soufre de polymères contenant des doubles liaisons; et de mélanges des polymères précités.

**9.** Composition selon la revendication 1, caractérisée en ce que le polymère thermoplastique du constituant a) est un homo- ou copolymère d'un ester d'acide acrylique ou méthacrylique qui contient dans le groupe ester des groupes aliphatiques ou cycloaliphatiques chlorés, bromés et/ou iodés.

**10.** Composition selon la revendication 9, caractérisée en ce que le polymère contient
a) 0,1 à 100 % en moles d'au moins une unité constitutive de formule III

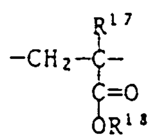

(III),

et
b) 0 à 99,9 % en moles d'au moins une unité constitutive de formule IV

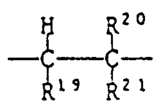

(IV)

par rapport au polymère, dans lesquelles $R^{17}$ est H ou un méthyle; $R^{18}$ représente un reste $(R^{22}\text{-O-CO})_z\ C_mH_nX^2_o$ , où z signifie 0 ou 1, m est un nombre de 1 à 12, n est 0 ou un nombre de 1 à 24 et o est un nombre de 1 à 25 et la somme n + o = 2m + 1, $X^2$ est Cl, Br ou I et $R^{22}$ représente un groupe alkylène en $C_2$-$C_{12}$, cycloalkylène en $C_4$-$C_{12}$, (cycloalkylène en $C_4$-$C_{12}$)-$CH_2$-, (cycloalkylène en $C_4$-$C_{12}$)$-(CH_2)_2$, benzylène ou xylylène, non substitué ou substitué par OH, Cl, Br ou phényle; $R^{19}$ représente H, un alkyle en $C_1$-$C_6$ ou -$COOR^{23}$; $R^{20}$ est H, F, Cl, CN ou un alkyle en $C_1$-$C_6$; et $R^{21}$ est H, F, Cl, CN, $R^{23}$-O-, un alkyle en $C_1$-$C_{12}$, -$COOR^{23}$, -O-CO-$R^{23}$,-$COOR^{22}$-OH-,

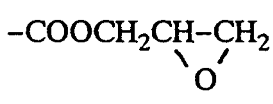

ou phényle, où $R^{22}$ a la signification donnée précédemment et $R^{23}$ est un alkyle en $C_1$-$C_{18}$, un cycloalkyle en $C_5$-$C_7$, un (alkyle en $C_1$-$C_{12}$)-cycloalkyle en $C_5$-$C_7$, un phényle, un (alkyle en $C_1$-$C_{12}$)-phényle, un benzyle ou un (alkyle en $C_1$-$C_{12}$)benzyle.

**11.** Composition selon la revendication 10, caractérisée en ce que $R^{17}$ représente un méthyle; $R^{18}$ est un reste -$R^{22}$-O-CO-$C_mH_nX^2_o$ , où m est un nombre de 1 à 6, n est 0 ou un nombre de 1 à 12 et o est un nombre de 1 à 13, et la somme n + o = 2m + 1, $X^2$ est Cl et $R^{22}$ représente un groupe alkylène en $C_2$-$C_6$, cyclopentylène, cyclohexylène, cyclopentylène-$CH_2$- ou cyclohexylène$-(CH_2)_2$, non substitué ou substitué par OH ou Cl; $R^{19}$ représente H; $R^{20}$ est H, F, Cl, ou un alkyle en $C_1$-$C_4$; et $R^{21}$ est H, F, Cl, CN, $R^{23}$-O-, un alkyle en $C_1$-$C_6$, -$COOR^{23}$, -O-CO-$R^{23}$, -$COOR^{22}$-OH,

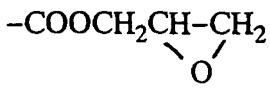

ou phényle, $R^{22}$ a la signification donnée précédemment et $R^{23}$ est un alkyle en $C_1$-$C_6$, un cycloalkyle en $C_5$ ou en $C_6$, un phényle ou un benzyle.

**12.** Composition selon la revendication 10, caractérisée en ce que $R^{17}$ est un méthyle; $R^{18}$ est un reste $-R^{22}-O-CO-C_mH_nX^2_o$, où m est un nombre de 1 à 4, n est 0 ou un nombre de 1 à 8 et o est un nombre de 1 à 9, et la somme n + o = 2m + 1, $X^2$ est Cl; $R^{22}$ représente un alkylène en $C_2$-$C_6$ linéaire ou $-CH_2CHOHCH_2-$; $R^{19}$ et $R^{20}$ représentent H; et $R^{21}$ est $-COOR^{22}OH$ ou $-COOR^{23}$, où $R^{22}$ a la signification donnée précédemment et $R^{23}$ est un alkyle en $C_1$-$C_6$.

**13.** Composition selon la revendication 1, caractérisée en ce que le polymère thermoplastique du constituant a) est un produit de polyaddition linéaire d'un composé glycidylé ayant en moyenne plus d'un groupe époxy et d'un diol, d'une monoamine primaire, d'une diamine disecondaire, d'un diamide d'acide dicarboxylique linéaire ou cyclique disecondaire ou d'un acide dicarboxylique, dans lequel l'atome d'hydrogène des groupes OH secondaires est substitué au moins partiellement par un groupe $-CO-C_mH_nX^2_o$, où m est un nombre de 1 à 12, n est 0 ou un nombre de 1 à 24 et o est un nombre de 1 à 25, et la somme n + o = 2m + 1 et $X^2$ est Cl, Br ou I.

**14.** Composition selon la revendication 11, caractérisée en ce que le produit de polyaddition contient

a) 100 à 0,1 % en moles d'unités constitutives identiques ou différentes de formule V

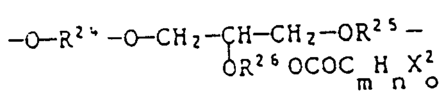 (V)

et

b) 99,9 à 0 % en moles d'unités constitutives identiques ou différentes de formule VI

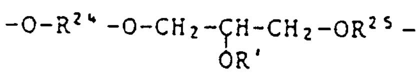 (VI)

par rapport au produit de polyaddition, où $R^{24}$ et $R^{25}$ représentent indépendamment l'un de l'autre le reste d'un diol à groupes diols aliphatiques ou aromatiques amputé de deux groupes hydroxy, et R' est H, un groupe alkyle en $C_1$-$C_{20}$, acyle en $C_1$-$C_{20}$ ou aminocarbonyle N-substitué par un reste hydrocarboné en $C_1$-$C_{20}$, non substitué ou substitué par OH, $-OR^{26}-$ représente une liaison directe ou $R^{26}$ représente un éthylène non substitué ou substitué par un alkyle en $C_1$-$C_{16}$, et $X^2$, m, n et o ont les significations données dans la revendication 12.

**15.** Composition selon la revendication 14, caractérisée en ce que $R^{24}$ et $R^{25}$ représentent indépendamment l'un de l'autre un reste de formule

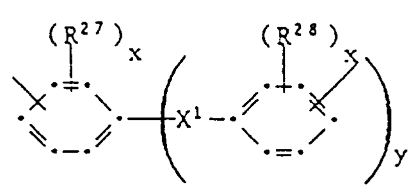

dans laquelle $X^1$ représente une liaison directe, un alkylène en $C_1$-$C_4$, un alkylidène en $C_2$-$C_{12}$, un cycloalkylidène en $C_5$-$C_8$, -O-, -S-, -SO-, $-SO_2-$, -CO-, $-CO_2-$, -N(alkyle en $C_1$-$C_4$)- ou $-Si(CH_3)_2-$, $R^{27}$ et $R^{28}$ sont indépendamment l'un de l'autre H, un halogène, un alkyle en $C_1$-$C_4$ ou un alcoxy en $C_1$-$C_4$, et x signifie 0, 1 ou 2, et y est 0 ou 1.

**16.** Composition selon la revendication 15, caractérisée en ce que $R^{24}$ et $R^{25}$ représentent le reste

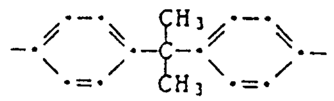 .

**17.** Composition selon la revendication 1, caractérisée en ce que le polymère thermoplastique du constituant a) est un homo- ou copolymère de l'alcool vinylique dans lequel l'atome d'hydrogène du groupe OH secondaire est au moins partiellement substitué par un groupe $-Y-C_mH_nX^2_o$ , où Y est une liaison directe, -CO- ou $-R^{26}$-O-CO-, $X^2$ est Cl, Br ou I, m est un nombre de 1 à 12, n est 0 ou un nombre de 1 à 24 et o est un nombre de 1 à 25, et la somme n + o = 2m + 1, et $R^{26}$ représente un éthylène non substitué ou substitué par alkyle en $C_1$-$C_{16}$.

**18.** Composition selon la revendication 17, caractérisée en ce que le copolymère contient
a) 90 à 0,1 % en moles d'unités constitutives de formule VII

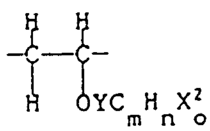 (VII),

et
b) 99,9 à 10 % en moles d'unités constitutives identiques ou différentes de formule VIII

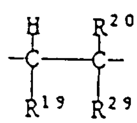 (VIII),

dans laquelle Y est une liaison directe, -CO- ou $-R^{26}$-O-CO-, $X^2$ est Cl, Br ou I, m est un nombre de 1 à 12, n est 0 ou un nombre de 1 à 24 et o est un nombre de 1 à 25, et la somme n + o = 2m + 1, et $R^{26}$ représente un éthylène non substitué ou substitué par alkyle en $C_1$-$C_{16}$; $R^{19}$ est H, un alkyle en $C_1$-$C_6$ ou $-COOR^{23}$; $R^{20}$ est H, F, Cl, CN ou un alkyle en $C_1$-$C_6$; et $R^{29}$ est H, F, Cl, CN, OH, $R^{23}O$-, un alkyle en $C_1$-$C_{12}$, $-COOR^{23}$, $-O-CO-R^{23}$, $-OR^{22}OH$ ou un phényle; $R^{23}$ est un alkyle en $C_1$-$C_{18}$, un cycloalkyle en $C_5$-$C_7$, un (alkyle en $C_1$-$C_{12}$)-cycloalkyle en $C_5$-$C_7$, un phényle, un (alkyle en $C_1$-$C_{12}$)phényle, un benzyle ou un (alkyle en $C_1$-$C_{12}$)benzyle et $R^{22}$ est un éthylène non substitué ou substitué par un alkyle en $C_1$-$C_{16}$.

**19.** Composition selon la revendication 18, caractérisée en ce que Y est une liaison directe, -CO-, $-CH_2CH_2O$-CO- ou $-CH_2CH(CH_3)O$-CO-, $X^2$ est Cl, m est un nombre de 1 à 6, n est 0 ou un nombre de 1 à 12 et o est un nombre de 1 à 13 et la somme n + o = 2m + 1; $R^{19}$ et $R^{20}$ signifient H; et $R^{29}$ est H, F, Cl, CN, OH, $R^{23}O$-, alkyle en $C_1$-$C_4$, $-COOR^{23}$, $-O-CO-R^{23}$, un phényle, $-OCH_2CH_2OH$ ou $-OCH_2CH(CH_3)OH$; et $R^{23}$ est un alkyle en $C_1$-$C_6$, un cycloalkyle en $C_5$ ou en $C_6$, un phényle ou un benzyle.

**20.** Procédé de préparation d'une composition selon la revendication 1, caractérisé en ce que
a) on fait réagir un polymère thermoplastique qui contient des groupes latéraux aliphatiques ou cycloaliphatiques liés à un polymère-tronc par l'intermédiaire d'un groupe -O-, -O-CO-, $-CO-OR^{22}$-

OCO- ou -CO-O-, qui contiennent en position α, β, γ ou ω au moins un atome de Cl, Br ou I, sur un composé de formule I et/ou de formule Ia

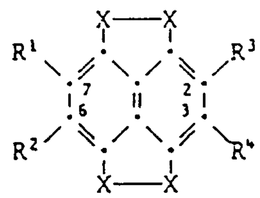

(I),

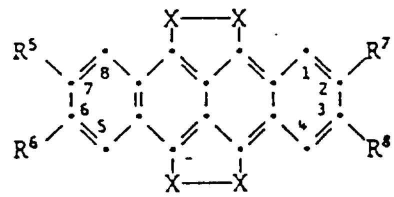

(Ia),

dans lesquelles X signifie S, Se ou Te, $R^1$, $R^2$, $R^3$ et $R^4$ représentent indépendamment les uns des autres un atome d'hydrogène ou de chlore, ou bien $R^1$ et $R^2$ ensemble, ainsi que $R^3$ et $R^4$ ensemble forment chacun

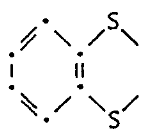

ou

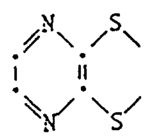

ou bien

$R^1$, $R^2$, $R^3$ et $R^4$ représentent chacun un phénylthio, un 4-méthyl- ou 4-méthoxyphénylthio ou un 4-pyridylthio, $R^5$, $R^6$, $R^7$ et $R^8$ représentent indépendamment les uns des autres H ou F, $R^5$ représente $CH_3$ et $R^6$, $R^7$ et $R^8$ sont H, ou $R^5$, $R^6$, $R^7$ et $R^8$ sont $CH_3$, $R^5$ et $R^6$ sont $CH_3$ ou Cl et $R^7$ et $R^8$ sont H, ou $R^5$ et $R^6$ sont H, $R^7$ est $-COR^9$ et $R^8$ est H ou $-COR^9$, ou $R^5$ et $R^6$ sont H et $R^7$ et $R^8$ forment représentent ensemble -CO-O-CO- ou $-CO-NR^{10}-CO-$, où $R^9$ représente un halogène, -OH, $-NH_2$ ou le reste d'un alcool ou d'une amine primaire ou secondaire, ou est -OM, M représentant un cation, et $R^{10}$ est H ou le reste d'une amine primaire amputé du groupe $NH_2$.

**21.** Procédé selon la revendication 20, caractérisé en ce qu'il est effectué à une température comprise entre 25 et 350 ° C.

**22.** Procédé selon la revendication 20, caractérisé en ce qu'on l'effectue en présence d'un solvant organique inerte qui s'évapore à une température de 25 à 350 ° C.

**23.** Composition contenant

a) un polymère thermoplastique qui contient sur un polymère-tronc des groupes latéraux aliphatiques ou cycloaliphatiques reliés par l'intermédiaire d'un groupe -O-, -O-CO-, $-CO-OR^{22}-OCO-$ ou -CO-O-, qui contiennent en position α, β, γ ou ω au moins un atome de Cl, Br ou I, $R^{22}$ représentant un groupe alkylène en $C_2$-$C_{12}$, cycloalkylène en $C_4$-$C_{12}$, (cycloalkylène en $C_4$-$C_{12}$)-$CH_2$-, (cycloalkylène en $C_4$-$C_{12}$)$-(CH_2)_2$, benzylène ou xylylène, non substitué ou substitué par OH, Cl, Br ou phényle, et

b) un composé de formule I et/ou de formule Ia

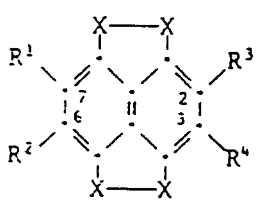

(I),

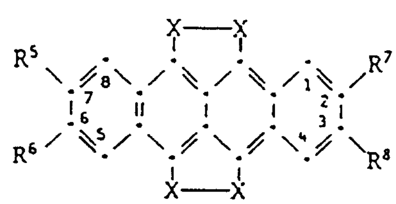

(Ia),

dans lesquelles X est S, Se ou Te, $R^1$, $R^2$, $R^3$ et $R^4$ représentent indépendamment les uns des autres un atome d'hydrogène ou Cl, ou $R^1$ et $R^2$ ensemble, ainsi que $R^3$ et $R^4$ ensemble forment

chacun

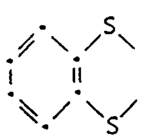 ou 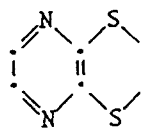 ou bien

$R^1$, $R^2$, $R^3$ et $R^4$ représentent chacun un phénylthio, un 4-méthyl- ou 4-méthoxyphénylthio ou un 4-pyridylthio, $R^5$, $R^6$, $R^7$ et $R^8$ représentent indépendamment les uns des autres H ou F, $R^5$ représente $CH_3$ et $R^6$, $R^7$ et $R^8$ sont H, ou $R^5$, $R^6$, $R^7$ et $R^8$ sont $CH_3$, $R^5$ et $R^6$ sont $CH_3$ ou Cl et $R^7$ et $R^8$ sont H, ou $R^5$ et $R^6$ sont H, $R^7$ est $-COR^9$ et $R^8$ est H ou $-COR^9$, ou $R^5$ et $R^6$ sont H et $R^7$ et $R^8$ forment représentent ensemble -CO-O-CO- ou $-CO-NR^{10}-CO-$, où $R^9$ représente un halogène, -OH, $-NH_2$ ou le reste d'un alcool ou d'une amine primaire ou secondaire, ou est -OM, M représentant un cation, et $R^{10}$ est H ou le reste d'une amine primaire amputé du groupe $NH_2$, et
c) éventuellement un solvant organique inerte.

**24.** Composition selon la revendication 23, caractérisée en ce qu'elle contient en outre un polymère thermoplastique différent du constituant a).

**25.** Composition selon la revendication 23, caractérisée en ce que le constituant a) est contenu en une quantité au moins suffisante pour la formation de complexes de TC à partir des composés du constituant b).

**26.** Composition selon la revendication 23, caractérisée en ce que le constituant b) est contenu en une quantité de 0,01 à 20 % en masse par rapport au polymère du constituant a).

**27.** Composition conductrice de l'électricité ou dotée d'un caractère antistatique, pouvant être obtenue par chauffage et éventuellement évaporation du solvant d'une composition selon la revendication 23.

**28.** Objets façonnés, films, revêtements et composites formés à partir d'une composition selon les revendications 1 ou 27.

**29.** Homo- ou copolymère formé à partir d'esters d'acide acrylique ou méthacrylique, qui contient dans le groupe ester des groupes aliphatiques ou cycloaliphatiques chlorés, bromés et/ou iodés en position $\alpha$, $\beta$, $\gamma$ ou $\omega$.

**30.** Homo- ou copolymère selon la revendication 29, caractérisé en ce que le groupe ester lié à l'atome d'oxygène du groupe carboxyle contient des groupes $-(R^{22}-O-CO-)_z-C_mH_nX^2_o$ , où z signifie 0 ou 1, m est un nombre de 1 à 12, n est 0 ou un nombre de 1 à 24 et o est un nombre de 1 à 25, et la somme n + o = 2m + 1, $X^2$ est Cl, Br ou I et $R^{22}$ représente un groupe alkylène en $C_2$-$C_{12}$, cycloalkylène en $C_4$-$C_{12}$, (cycloalkylène en $C_4$-$C_{12}$)-$CH_2$-, (cycloalkylène en $C_4$-$C_{12}$)$(CH_2)_2$, benzylène ou xylylène, non substitué ou substitué par OH, Cl, Br ou phényle.

**31.** Homo- ou copolymère selon la revendication 29, caractérisé en ce qu'il contient
a) 0,1 à 100 % en moles d'au moins une unité constitutive de formule III et

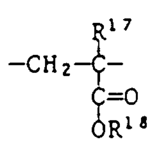 (III),

b) 0 à 99,9 % en moles d'au moins une unité constitutive de formule IV

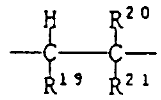 (IV)

par rapport au polymère, dans lesquelles $R^{17}$ est H ou un méthyle; $R^{18}$ représente un reste $(R^{22}$-O-$CO)_z$ $C_mH_nX^2_o$ , où z signifie 0 ou 1, m est un nombre de 1 à 12, n est 0 ou un nombre de 1 à 24 et o est un nombre de 1 à 25 et la somme n + o = 2m + 1, $X^2$ est Cl, Br ou I et $R^{22}$ représente un groupe alkylène en $C_2$-$C_{12}$, cycloalkylène en $C_4$-$C_{12}$, (cycloalkylène en $C_4$-$C_{12}$)-$CH_2$-, (cycloalkylène en $C_4$-$C_{12}$)$\leftarrow CH_2 \rightarrow_2$, benzylène ou xylylène, non substitué ou substitué par OH, Cl, Br ou phényle; $R^{19}$ représente H, un alkyle en $C_1$-$C_6$ ou -$COOR^{23}$; $R^{20}$ est H, F, Cl, CN ou un alkyle en $C_1$-$C_6$; et $R^{21}$ est H, F, Cl, CN, $R^{23}$-O-, un alkyle en $C_1$-$C_{12}$, -$COOR^{23}$, -O-CO-$R^{23}$,-$COOR^{22}$-OH,

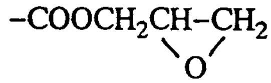

ou phényle, où $R^{22}$ a la signification donnée précédemment et $R^{23}$ est un alkyle en $C_1$-$C_{18}$, un cycloalkyle en $C_5$-$C_7$, un (alkyle en $C_1$-$C_{12}$)-cycloalkyle en $C_5$-$C_7$, un phényle, un (alkyle en $C_1$-$C_{12}$)-phényle, un benzyle ou un (alkyle en $C_1$-$C_{12}$)benzyle.

**32.** Homo- ou copolymère selon la revendication 29, caractérisé en ce que $R^{17}$ représente un méthyle; $R^{18}$ représente un reste -$R^{22}$-O-$C_mH_nX^2_o$ , dans lequel m est un nombre de 1 à 6, n est 0 ou un nombre de 1 à 12 et o est un nombre de 1 à 13, et la somme n + o = 2m +1, $X^2$ est Cl, et $R^{22}$ représente un groupe alkylène en $C_2$-$C_6$, cyclopentylène, cyclohexylène, cyclopentylène-$CH_2$-, cyclohexylène-$CH_2$ ou cyclohexylène-$(CH_2)_2$, non substitué ou substitué par OH ou Cl; $R^{19}$ représente H; $R^{20}$ est H, F, Cl ou un alkyle en $C_1$-$C_4$; et $R^{21}$ est H, F, Cl, CN, $R^{23}$-O-, un alkyle en $C_1$-$C_6$, -$COOR^{23}$, -O-CO-$R^{23}$, -$COOR^{22}$-OH,

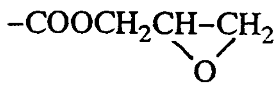

ou phényle, $R^{22}$ a la signification donnée précédemment et $R^{23}$ est un alkyle en $C_1$-$C_6$, un cycloalkyle en $C_5$ ou en $C_6$, un phényle ou un benzyle.

**33.** Homo- ou copolymère selon la revendication 30, caractérisé en ce que $R^{18}$ correspond à un reste -$R^{22}$-O-CO-$C_mH_nX^2_o$ , dans lequel $R^{22}$ représente un alkylène en $C_2$-$C_6$ linéaire ou ramifié, $X^2$ est Cl et m est un nombre de 1 à 4, n est 0 ou un nombre de 1 à 8 et o est un nombre de 1 à 9, et la somme n + o = 2m + 1.

**34.** Homo- ou copolymère selon la revendication 33, caractérisé en ce que le groupe -$C_mH_nX^2_o$ représente de préférence -$CH_2Cl$, -$CHCl_2$, -$CCl_3$, -$CHClCH_3$, -$CCl_2CH_3$, -$CHCl$-$CH_2Cl$, -$CCl_2$-$CH_2Cl$, -$CHCl$-$CHCl_2$, -$CCl_2CHCl_2$, -$CCl_2$-$CCl_3$, -$CH_2$-$CH_2Cl$, -$CH_2$-$CHCl_2$ ou -$CH_2$-$CCl_3$.

**35.** Homo- ou copolymère, caractérisé en ce qu'il s'agit, en ce qui concerne le polymère thermoplastique, d'un produit de polyaddition linéaire obtenu à partir d'un composé glycidylé ayant en moyenne plus d'un groupe époxy et d'un diol, d'une monoamine primaire, d'une diamine disecondaire, d'un diamide d'acide dicarboxylique linéaire ou cyclique disecondaire ou d'un acide dicarboxylique, dans lequel l'atome d'hydrogène des groupes OH secondaires est substitué au moins partiellement par un groupe -CO-$C_mH_nX^2_o$ , où m est un nombre de 1 à 12, n est 0 ou un nombre de 1 à 24 et o est un nombre de 1 à 25, et la somme n + o = 2m + 1 et $X^2$ est Cl, Br ou I.

**36.** Homo- ou copolymère selon la revendication 35, caractérisé en ce que le produit de polyaddition contient

a) 100 à 0,1 % en moles d'unités constitutives identiques ou différentes de formule V

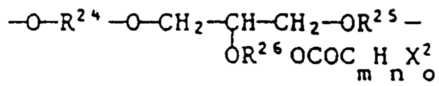

(V)

et

b) 99,9 à 0 % en moles d'unités constitutives identiques ou différentes de formule VI

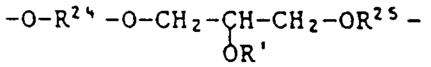

(VI)

par rapport au produit de polyaddition, où $R^{24}$ et $R^{25}$ représentent indépendamment l'un de l'autre le reste d'un diol à groupes diols aliphatiques ou aromatiques amputé de deux groupes hydroxy, et R' est H, un groupe alkyle en $C_1$-$C_{20}$, acyle en $C_1$-$C_{20}$ ou aminocarbonyle N-substitué par un reste hydrocarboné en $C_1$-$C_{20}$, non substitué ou substitué par OH, $-OR^{26}-$ représente une liaison directe ou $R^{26}$ représente un éthylène non substitué ou substitué par un alkyle en $C_1$-$C_{16}$, et $X^2$, m, n et o ont les significations indiquées dans la revendication 31.

**37.** Homo- ou copolymère selon la revendication 36, caractérisé en ce que $R^{24}$ et $R^{25}$ représentent indépendamment l'un de l'autre un reste de formule

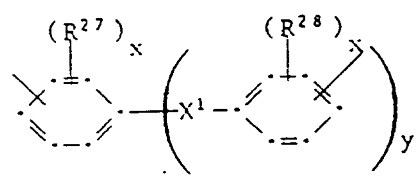

dans laquelle $X^1$ représente une liaison directe, un alkylène en $C_1$-$C_4$, un alkylidène en $C_2$-$C_{12}$, un cycloalkylidène en $C_5$-$C_8$, -O-, -S-, -SO-, $-SO_2-$, -CO-, $-CO_2-$, -N(alkyle en $C_1$-$C_4$)- Ou $-Si(CH_3)_2-$, $R^{27}$ et $R^{28}$ sont indépendamment l'un de l'autre H, un halogène, un alkyle en $C_1$-$C_4$ ou un alcoxy en $C_1$-$C_4$, et x signifie 0, 1 ou 2, et y est 0 ou 1.

**38.** Homo- ou copolymère selon la revendication 37, caractérisé en ce que $R^{24}$ et $R^{25}$ représentent le reste

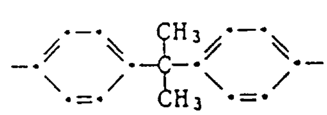

**39.** Homo- ou copolymère selon la revendication 36, caractérisé en ce que $-OR^{26}-$ représente une liaison directe, $X^2$ est Cl et m est un nombre de 1 à 4, n est 0 ou un nombre de 1 à 8 et o est un nombre de 1 à 9, et la somme $n + o = 2m + 1$.

**40.** Homo- ou copolymère selon la revendication 35, caractérisé en ce que le groupe $-C_mH_nX^2_o$ représente $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2CHCl_2$, $-CCl_2-CCl_3$, $-CH_2-CH_2Cl$, $-CH_2-CHCl_2$ ou $-CH_2-CCl_3$.

**41.** Homo- ou copolymère, caractérisé en ce qu'il s'agit d'un homo- ou copolymère de l'alcool vinylique dans lequel l'atome d'hydrogène du groupe OH secondaire est au moins partiellement substitué par un groupe $-Y^1-C_mH_nX^2_o$ , où $Y^1$ est -CO- ou $-R^{26}-O-CO-$, $X^2$ est Cl, Br ou I, m est un nombre de 1 à 12, n est 0 ou un nombre de 1 à 24 et o est un nombre de 1 à 25, et la somme n + o = 2m + 1, et $R^{26}$ représente un éthylène non substitué ou substitué par alkyle en $C_1$-$C_{16}$.

**42.** Homo- ou copolymère selon la revendication 41, caractérisé en ce que le copolymère contient

a) 90 à 0,1 % en moles d'unités constitutives de formule VII et

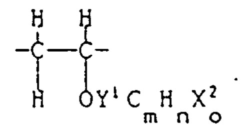

(VII),

b) 99,9 à 10 % en moles d'unités constitutives identiques ou différentes de formule VIII

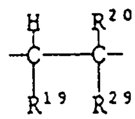

(VIII),

dans laquelle $Y^1$ est -CO- ou $-R^{26}-O-CO-$, $X^2$ est Cl, Br ou I, m est un nombre de 1 à 12, n est 0 ou un nombre de 1 à 24 et o est un nombre de 1 à 25, et la somme n + o = 2m + 1, et $R^{26}$ représente un éthylène non substitué ou substitué par alkyle en $C_1$-$C_{16}$; $R^{19}$ est H, un alkyle en $C_1$-$C_6$ ou $-COOR^{23}$; $R^{20}$ est H, F, Cl, CN ou un alkyle en $C_1$-$C_6$; et $R^{29}$ est H, F, Cl, CN, OH, $R^{23}O-$, un alkyle en $C_1$-$C_{12}$, $-COOR^{23}$, $-O-CO-R^{23}$, $-OR^{22}OH$ ou un phényle; $R^{23}$ est un alkyle en $C_1$-$C_{18}$, un cycloalkyle en $C_5$-$C_7$, un (alkyle en $C_1$-$C_{12}$)-cycloalkyle en $C_5$-$C_7$, un phényle, un (alkyle en $C_1$-$C_{12}$)-phényle, un benzyle ou un (alkyle en $C_1$-$C_{12}$)benzyle et $R^{22}$ est un éthylène non substitué ou substitué par un alkyle en $C_1$-$C_{16}$.

**43.** Homo- ou copolymère selon la revendication 42, caractérisé en ce que $Y^1$ est -CO-, $-CH_2CH_2O-CO-$ ou $-CH_2CH(CH_3)O-CO-$, $X^2$ est Cl, m est un nombre de 1 à 6, n est 0 ou un nombre de 1 à 12 et o est un nombre de 1 à 13 et la somme n + o = 2m + 1; $R^{19}$ et $R^{20}$ signifient H; et $R^{29}$ est H, F, Cl, CN, OH, $R^{23}O-$, un alkyle en $C_1$-$C_4$, $-COOR^{23}$, $-O-CO-R^{23}$, un phényle, $-OCH_2CH_2OH$ ou $-OCH_2CH(CH_3)OH$; et $R^{23}$ est un alkyle en $C_1$-$C_6$, un cycloalkyle en $C_5$ ou en $C_6$, un phényle ou un benzyle.

**44.** Homo- ou copolymère selon la revendication 42, caractérisé en ce que $X^2$ est Cl, et m est un nombre de 1 à 4, n est 0 ou un nombre de 1 à 8 et o est un nombre de 1 à 9, et la somme n + o = 2m + 1.

**45.** Homo- ou copolymère selon la revendication 42, caractérisé en ce que le groupe $-C_mH_nX^2_o$ représente $-CH_2Cl$, $-CHCl_2$, $-CCl_3$, $-CHClCH_3$, $-CCl_2CH_3$, $-CHCl-CH_2Cl$, $-CCl_2-CH_2Cl$, $-CHCl-CHCl_2$, $-CCl_2CHCl_2$, $-CCl_2-CCl_3$, $-CH_2-CH_2Cl$, $-CH_2-CHCl_2$ ou $-CH_2-CCl_3$.